(19) Europäisches Patentamt
European Patent Office
Office européen des brevets

(11) **EP 3 783 312 A1**

(12) **EUROPEAN PATENT APPLICATION**

(43) Date of publication:
**24.02.2021 Bulletin 2021/08**

(51) Int Cl.:
**G01C 21/20** (2006.01)     **G01C 21/30** (2006.01)
**G01S 5/02** (2010.01)     **H04W 4/02** (2018.01)

(21) Application number: **19192197.2**

(22) Date of filing: **19.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **HERE Global B.V.**
**5611 ZT Eindhoven (NL)**

(72) Inventors:
• **RAUHALA, Petri**
**33100 Tampere (FI)**
• **WIROLA, Lauri**
**33100 Tampere (FI)**
• **LUOMI, Marko**
**33880 Lempäälä (FI)**

(74) Representative: **Cohausz & Florack**
**Patent- & Rechtsanwälte**
**Partnerschaftsgesellschaft mbB**
**Bleichstraße 14**
**40211 Düsseldorf (DE)**

(54) **MATCHING OF CROWDSOURCED BUILDING FLOORS WITH THE GROUND LEVEL**

(57)     It is inter-alia disclosed a method performed by at least one apparatus, the method comprising:
- obtaining or causing obtaining radiomap data representing at least a part of a structure, the radiomap data comprising radiomap data acquired at least along a part of a first track comprising a first position at a reference altitude and a second position inside of the structure;
- associating or causing associating the radiomap data of the second position with relative altitude information of the structure based on the reference altitude of the first position.

Obtain or cause obtaining radiomap data representing at least part of a structure, the radiomap data comprising radiomap data acquired at least along part of a first track including a first position at a reference altitude and a second position inside of the structure — 611

Associate or cause associating the radiomap data of the second position with relative altitude information of the structure based on the reference altitude of the first position — 612

Fig.6A

EP 3 783 312 A1

## Description

## FIELD OF THE DISCLOSURE

The invention generally relates to the field of positioning, more specifically to the field of indoor positioning. The invention specifically relates to a method that enables associating radiomap data, in particular radiomap data layers, with relative altitude information of a structure, e.g. with reference to a floor level.

## BACKGROUND

Indoor positioning technologies may generally include indoor positioning solutions based on a use of pseudolites, i.e. GPS-like short-range beacons, solutions based on ultra-sound positioning, solutions based on Bluetooth (e.g. Bluetooth Low Energy, BTLE), Wireless Local Area Network (WLAN) or cellular signals. Thereby, solutions based on the latter Bluetooth, WLAN and cellular signals may be considered advantageous in that corresponding technology is supported by existing mobile devices and that corresponding infrastructure already exists in many places.

A mobile device may be positioned indoors (a position estimate of the mobile device maybe obtained) using a radiomap stored at a server communicating with the mobile device or stored at the mobile device. A radiomap may correspond to or may be generated based on radio fingerprints comprising combinations of radio measurements, horizontal and vertical position information. Vertical position information may pertain to relative altitude information, e.g. floor indices or identifiers indicating floor levels of a building, or to absolute altitude information. Absolute altitude may correspond to an altitude with respect to a reference altitude such as the mean sea level or a reference altitude based on the WGS (World Geodetic System) 84 reference ellipsoid. When acquiring radio fingerprints, a mobile device may estimate its absolute altitude e.g. using global navigation satellite systems (GNSS) and/or a barometer of the mobile device.

Adding altitude information to radiomap data is useful in particular where e.g. in cities a large number of multi-story buildings exist. However, while during a fingerprint collection process e.g. when collecting radiomap data, mobile devices may be enabled to automatically associate each fingerprint with absolute altitude information, an association with relative altitude information, e.g. with information on which floor of a building a respective fingerprint has been acquired, may need to be performed manually by a user of the mobile device. However, in particular for multi-story buildings, such manual association may be impractical. Thus, in particular when large radiomaps are to be generated in particular covering areas in cities including multi-story buildings, it is desirable to automatize also an association of collected fingerprints with corresponding relative altitude information.

Solutions exist where sensor information (such as barometer measurements) is used to detect transitions from one floor of a building to a next floor of a building. Such sensor information can be used to estimate the number of layers for a building, e.g. when a user visits each floor of a building with a mobile device that collects fingerprints with associated sensor data. It is thus possible to detect that a certain building includes a certain number of floors. Corresponding radiomap data collected by such mobile device may thus be structured into layers of collected fingerprints where each layer corresponds to a floor of a building. However, an association between each layer of radiomap data with floor indices remains to be performed manually by the user. It is thus e.g. not possible to automatically detect which of radiomap data layers corresponds e.g. to a building floor below ground or above ground. It is not possible to detect if, for example, a fourth radiomap data layer corresponds to a 3rd floor of a building or a 1st floor of the building. Consequently, when positioning a mobile device based on such radiomap data, it is not possible to estimate on which floor the mobile device - or its user - is. The mobile device may only be determined to be on a certain abstract layer of the radiomap data.

## SUMMARY OF SOME EMBODIMENTS OF THE INVENTION

However, in particular when a user of a mobile device makes an emergency phone call, it is desirable to accurately position the user (obtain a position estimate of the user) and in particular to be able to estimate on which floor of a multi-story building the user is located.

It is inter-alia an object of the present invention to provide a method that allows enabling associating radiomap data, in particular radiomap data layers, with relative altitude information of a structure, e.g. with reference to a floor level.

According to a first exemplary aspect of the invention, a method performed by at least one apparatus is disclosed, said method comprising:

- obtaining or causing obtaining radiomap data representing at least a part of a structure, the radiomap data comprising radiomap data acquired at least along a part of a first track comprising a first position at a reference altitude and a second position inside of the structure;
- associating or causing associating the radiomap data of the second position with relative altitude information of the structure based on the reference altitude of the first position.

According to a second exemplary aspect of the invention, a method performed by at least one apparatus is disclosed, said method comprising:

- obtaining or causing obtaining radio measurement data representative of a radio environment at a position of the at least one apparatus;

- obtaining or causing obtaining a position estimate of the at least one apparatus based on the radio measurement data and radio map data representing at least a part of a structure; wherein the radiomap data comprises radiomap data acquired at least along a part of a track comprising a first position at a reference altitude and a second position inside of the structure, wherein the second position is associated with relative altitude information of the structure based on the reference altitude of the first position.

For each of the methods according to the first and second aspects of the invention, an apparatus is furthermore disclosed (and subsequently referred to as apparatus according to the first or second aspect of the invention) that is configured to perform and/or control the respective method or comprises respective means for performing and/or controlling the steps of the respective method. In this case, it is possible either for all the steps of the respective method to be controlled, or for all the steps of the respective method to be performed, or for one or more steps to be controlled and one or more steps to be performed. One or more of the means can also be performed and/or controlled by the same unit. By way of example, one or more of the means may be formed by one or more processors.

For each of the methods according to the first and second aspects of the invention, an apparatus (e.g. the at least one apparatus according to the first aspect or the at least one apparatus according to the second aspect) is furthermore disclosed (and subsequently referred to as apparatus according to the first or second aspect of the invention) that comprises at least one processor and at least one memory that contains program code, wherein the memory and the program code are configured to use the at least one processor to cause an apparatus (for example the apparatus having the processor and the memory) to perform and/or control at least the respective method. In this case, it is possible either for all the steps of the respective method to be controlled, or for all the steps of the respective method to be performed, or for one or more steps to be controlled and one or more steps to be performed.

The at least one apparatus according to the first aspect of the invention may correspond to at least one network entity such as at least one server (e.g. a positioning server, a server cloud, a positioning server cloud) and/or to at least one mobile device, for example, such as e.g. an Internet-of-Things (IoT) device, a smart home device, a smartphone, a tablet computer, a notebook computer, a smart watch, and a smart band. The at least one network entity such as at least one server (e.g. a positioning server, a server cloud, a positioning server cloud) according to the first aspect of the invention may be integrated in the back end of a positioning service providing company, for example.

The at least one apparatus according to the second aspect of the invention may correspond to at least one mobile device, for example, such as e.g. an Internet-of-Things (IoT) device, a smart home device, a smartphone, a tablet computer, a notebook computer, a smart watch, and a smart band.

For each of the methods according to the first and second aspects of the invention, a system is furthermore disclosed (and subsequently referred to a system according to the first or second aspect of the invention) that comprises at least one apparatus (e.g. the at least one apparatus according to the first aspect or the at least one apparatus according to the second aspect) that is configured to perform and/or control the respective method or has means for performing and/or controlling the steps of the respective method. In this case, it is possible either for all the steps of the respective method to be controlled, or for all the steps of the respective method to be performed, or for one or more steps to be controlled and one or more steps to be performed.

Further, a system is disclosed that comprises at least one apparatus according to the first aspect of the invention and at least one apparatus according to the second aspect of the invention.

In other words, a system is disclosed that comprises:

at least one apparatus configured for:

- obtaining or causing obtaining radiomap data representing at least a part of a structure, the radiomap data comprising radiomap data acquired at least along a part of a first track comprising a first position at a reference altitude and a second position inside of the structure;
- associating or causing associating the radiomap data of the second position with relative altitude information of the structure based on the reference altitude of the first position;

and at least one further apparatus configured for:

- obtaining or causing obtaining radio measurement data representative of a radio environment at a position of the at least one apparatus;
- obtaining or causing obtaining a position estimate of the at least one apparatus based on the radio measurement data and the radio map data representing at least the part of the structure; wherein the radiomap data comprises the radiomap data acquired at least along a part of the first track comprising the first position at the reference altitude and the second position inside of the structure, wherein the second position is associated with relative altitude information of the structure based on the reference altitude of the first position.

For each of the methods according to the first and second aspects of the invention, a computer program is furthermore disclosed (and subsequently referred to as computer program according to the first or second aspect of the invention) that comprises program instructions that cause a processor to perform and/or control the respective method when the computer program runs on the processor. In this specification, a processor is intended to be understood to mean control units, microprocessors, microcontrol units such as microcontrollers, digital signal processors (DSP), application-specific integrated circuits (ASICs) or field programmable gate arrays (FPGAs), inter alia.

In this case, it is possible either for all the steps of the respective method to be controlled, or for all the steps of the respective method to be performed, or for one or more steps to be controlled and one or more steps to be performed. By way of example, the computer program may be distributable via a network such as the internet, a telephone or mobile radio network and/or a local area network, for example. The computer program may at least in part be software and/or firmware of a processor. It may equally be implemented at least in part as hardware. By way of example, the computer program may be stored on a computer-readable storage medium, e.g. a magnetic, electric, electromagnetic, optical and/or other kind of storage medium. By way of example, the storage medium may be part of the processor, for example a (nonvolatile or volatile) program memory of the processor or a part thereof. By way of example, the storage medium is substantive, that is to say tangible, and/or non-transitory.

Exemplary embodiments of all aspects of the present invention may have one or more (or for instance all) of the properties described below.

As mentioned above, in accordance with the invention, the at least one apparatus is configured for

- obtaining or causing obtaining radiomap data representing (in particular a radio environment of) at least a part of a structure, the radiomap data comprising radiomap data acquired (in particular by a mobile device moved by a user along said track when collecting radiomap data e.g. in a crowdsourcing procedure) at least along a part of a first track comprising a first position at a reference altitude and a second position inside of the structure.

In an exemplary embodiment, the at least one apparatus corresponds to a server (and/or one or more processors thereof), a server system (and/or one or more processors thereof), a server cloud (and/or one or more processors thereof) and may be integrated in a back end of a positioning service providing company, for example. In the following, server, server system or server cloud will be collectively referred to as server. In particular in this context, obtaining or causing obtaining radiomap data may be generally understood as a process of referring to existing radiomap data for example stored at the server. For example, a server may obtain radiomap data stored at the server when loading part thereof from a memory at the server upon performing a positioning procedure of a mobile device. Further, in another embodiment of the first aspect, the at least one apparatus corresponds to a mobile device which is for example configured to store and analyze radiomap data. In another exemplary embodiment of the first aspect, the at least one apparatus corresponds to a mobile device configured for acquiring radiomap data, e.g. fingerprints, for building a new radiomap or for supplementing an existing radiomap. In this embodiment, obtaining or causing obtaining radiomap data may be generally understood as a process of obtaining radiomap data when for example acquiring said fingerprints. It is to be noted that in the context of the present disclosure, radiomap data representing at least a part of a structure is to be understood to mean radiomap data representing a radio environment of at least the part of the structure. Thereby, a radio environment of a structure may correspond to a distribution of radio signals and/or waves emitted (e.g. broadcasted) from wireless access points within the structure. Thereby, a wireless access point in accordance with embodiments of all aspects of the present disclosure may correspond to or comprise a Wireless Local Area Network, WLAN, access point, a Bluetooth access point; and/or an access point (e.g. a base station) of a cellular communications network. A cellular communications network may for example be a mobile phone network like a 2G/3G/4G/5G cellular communication network. The 2G/3G/4G/5G cellular radio communication standards are developed by the 3GPP and presently available under http://www.3gpp.org/.

In accordance with exemplary embodiments of the present invention, radiomap data may correspond to radiomap data of part of or an entire structure such as a building, e.g. such as a public building, for instance an office building or a mall. Thereby, in the context of the present disclosure, radiomap data may be understood as data pertaining to a radiomap. In general, a radiomap represents a mapping of information relating to radio signals emitted (e.g. broadcasted) by wireless access points e.g. within a structure to respective positions inside and/or outside of the structure. The information relating to radio signals may comprise in particular signal quality information of respective radio signals, e.g. Received Signal Strength Indicator(s) and/or path loss indicator(s) of one or more radio signals, and identification information of the respective radio signals, e.g. Service Set Identifiers, SSIDs, and/or MAC addresses, of wireless access points transmitting, e.g. broadcasting, said radio signals). The identification information may be included in, e.g. encoded in, and may thus be derived from the respective radio signals. In more detail, a radiomap may be understood as a collection of radio models (or radio images) of wireless access points (which may also be referred to as radio nodes) within a certain region or area. A radiomap may for example include position information (data representative of the position) of respective wireless access points. In addition or alternatively, the radio map may define (e.g. comprise data representative of) a coverage area of a respective wireless access point. The radio map may for example include data indicating that within said coverage area, radio signals from said respective wireless access point are receivable. In other words, the radio map may for example include information (e.g. data) that associates respective positions within said coverage area with corresponding identification information of respective wireless access points. Thereby, a radiomap may associate a position with identification information of one or more wireless access points if at this position coverage areas of one or more wireless access points overlap. In addition or alternatively, the radio map may include information associating positions with signal quality information (e.g. RSSI and/or path loss indicator) of radio signals transmitted (e.g. broadcasted) from one or more wireless access points.

As mentioned above, in the context of the present disclosure, radiomap data may be understood as data pertaining to a radiomap. Radiomap data may either correspond to data constituting a radiomap or to data allowing for generation of a radiomap. Radiomap data may for example comprise data representative of one or more fingerprints, where a fingerprint comprises position information of a position of the fingerprint and at least one measurement result of at least one radio signal observable at this position (of the radio environment at this position). The position of a fingerprint included in a radiomap may correspond to the position where a mobile device has performed a corresponding measurement of the radio environment (has obtained identification information of one or more wireless access points based on received radio signal(s) and/or signal quality information of the received signals) to store the measurement result in association with the position as fingerprint. The position may further be the position of a mobile device when performing positioning (when obtaining position estimates/estimates of its position) based on this radiomap. When performing positioning based on a radiomap, a mobile device may perform radio measurements (obtain identification information of one or more wireless access points based on received radio signal(s) and/or signal quality information of the received signals) and may relate results of the measurements to a radiomap stored at the mobile device and/or may communicate the measurement results to a server storing the radiomap. The server may in this case relate the obtained measurement results to the radiomap to determine the position of the mobile device.

In the context of the present disclosure, a measurement result of at least one radio signal observable at said position of the fingerprint (of the radiomap) is to be understood as measurement data representative of a radio environment at a position of the mobile device (acquiring fingerprints or being positioned). The position information may comprise horizontal position information (e.g. coordinates in longitude and latitude directions) and/or vertical position information (e.g. absolute altitude information). A measurement result of a radio signal may for example comprise identification information (e.g. SSID and/or a MAC address) of a wireless access point transmitting (e.g. broadcasting) the respective radio signal and/or signal quality information (e.g. RSSI and/or path loss) of the radio signal.

A radiomap may in particular at least partially be based on crowdsourced radiomap data (e.g. crowdsourced fingerprints). Crowdsourced data is in particular to be understood as data which is collected by a plurality of mobile devices (in particular by a large group of mobile devices such as thousands, hundred thousands, millions of mobile devices or even more) e.g. when carried by respective users along respective tracks. The collection may in particular be performed e.g. when a user carries his or her mobile device along a track or path for example within a structure such as a building, a track outside of such structure and/or a track entering/exiting such structure. In exemplary embodiments, a structure is a building, e.g. a public building, for example an office building or a mall. The collection may be performed automatically such that manual input of a user may not be required. Thus, acquiring radiomap data in a crowdsourcing process may be advantageous in that large amounts of data can be acquired automatically.

As mentioned above, position information of a fingerprint may comprise vertical position information, e.g. absolute altitude information. This may be useful for example where structures, e.g. buildings, include more than one floor. It is noted that in the context of the present disclosure, absolute altitude may correspond to an altitude with respect to a reference altitude such as the mean sea level or a reference altitude based on the WGS (World Geodetic System) 84 reference ellipsoid. Absolute altitude information may be acquired by a mobile device while acquiring fingerprints of a radio environment e.g. using global navigation satellite systems (GNSS) and/or a barometer of the mobile device. Acquisition of fingerprints in combination with vertical position information may thus enable structuring of radiomap data into one or more radiomap data layers where each of the one or more radiomap data layers comprises and/or is generated based on one or more fingerprints corresponding to a respective absolute altitude and/or a respective absolute altitude range. Thus, a radiomap data layer can be understood as an abstract (horizontal) layer determined in the radiomap and/or in the radiomap data. In an example, radiomap data layers may be referenced by radiomap layer indices/identifiers, i.e. continuous integers (such as "1", "2", "3", "4", "5", ...; "-1", "0", "1", "2", "3",...) or using similar naming schemes (e.g. "L1", "L2", "L3", "L4", "L5",...).

Hereby, it is to be noted that a radiomap layer index/identifier may only indirectly identify a floor in the real or physical world. For example, as mentioned, such radiomap layer index may be an integer which may be positive and/or negative. Thus, when radiomap layers for a given building (a structure) are built (e.g. by processing of radiomap data collected in a crowdsourcing process), respective radiomap layer indices may be assigned to the radiomap layers that run e.g. from 0 to 7, or from -2 to 5. The particular numbering may depend on the particular processing. As will be explained in more detail below, thereby, in accordance with all aspects of the invention, the built radiomap data comprises information indicating which of the radiomap layer indices (e.g. 0, or -2, or 5, etc.) corresponds to a ground level of the building. Hereby, it is to be noted that a building may have more than one floor corresponding to a ground level, e.g. if a building is located on slope and more than one floor corresponds to a ground level on different sides of the building. In case that a building has for example two floors that respectively correspond to a ground level at different sides of the building, said information indicating that the respective radiomap data layer corresponds to a ground floor may comprise further information indicative of the respective side (or edge) of the building.

Thus, if in the case of said building, for example, the radiomap layer index 2 corresponds to a ground level of said building, when a user is positioned on the layer with index 5, then the position estimate can include information that the user is at the 3rd floor above the ground (5-2 = 3). In other words, all aspects of the present invention may enable matching of a radiomap layer index value to the human-understandable physical world (relative) floor identifier at a positioning phase making use of existing radiomap data including said information indicating one or more radiomap layers that respectively correspond to a ground level of a building.

As mentioned above, while layers of radiomap data may correspond to floors of a building on an abstract level (e.g. in terms of a number of layers that may correspond to a number of building floors), the layers may lack an association with altitude information relative to the structure/building (relative altitude information). Relative altitude information may correspond to an altitude difference with respect to a reference altitude. Thereby, while absolute altitude information may correspond to an altitude defined relative to the sea level and/or a world geodetic system, i.e. is non-structure-specific, in accordance with embodiments of all aspects of the present invention, the relative altitude information corresponds to altitude information defined in relation to the structure (e.g. the building), i.e. is structure-specific altitude information.

For example, a floor index or identifier (0, 1, 2,...) is an example of relative altitude information, e.g. given in relation to floor 0 and/or a ground floor. As opposed to said radiomap layer index/identifier, a floor identifier is understood to identify a floor in the real or physical world. A floor identifier may in particular be human-understandable or -readable, such that a human typically knows simply by the identifier, which floor it is typically supposed to denote. In other words, a floor identifier is understood to be meaningful to an end user of a positioning device. A floor identifier may comprise numbers and/or letters, for instance. An example of typical floor identifiers of a building are "B3", "B2", "B1", "UG", "G", "1", "2", "3",....The floor identifiers are typically the ones used within an (geographic) indoor map of a building. Thus, a floor identifier may also be understood as identifiers used by an indoor map.

As mentioned, in accordance with the invention, the at least one apparatus is configured for obtaining or causing obtaining radiomap data acquired (e.g. by a mobile device moved by a user when collecting radiomap data) at least along part of a first track (e.g. from outside of a building into the building or from inside of a building out of the building). As explained above, radiomap data is typically collected by mobile devices moving along respective tracks when collecting items of radiomap data, e.g. fingerprints. Hereby, in the context of the present disclosure, a track is to be understood as a connection (an abstract connection) between an initial position and an end position, for example corresponding to a sequence (e.g. a discrete sequence) of positions. A connection between the initial position and the end position may be seen in that radiomap data has been acquired by a user's mobile device while moving along said track (e.g. within a given time interval). In a most simple case, a track may be understood as comprising only said initial position and said end position. Radiomap data may be collected at each of the positions forming said track and may form a subset of larger radiomap data potentially including multiple of such subsets. Individual subsets may be retrievable or recognizable from built radiomap data by later analysis.

For example, such subset may be recognizable as radiomap data acquired within a time interval set by a user of a mobile device. For example, a radiomap data collection process may be started by a user (e.g. using a corresponding radiomap collection application/program on the user's mobile device) at the initial position of the track and may be stopped by the user when the mobile device has reached the end position of the track. Radiomap data may be continuously (e.g. with a given time/distance spacing between individual items of collected radiomap data) acquired by the mobile device while moving from the initial position to the end position. In such case, the time interval set by the user corresponds to the time from starting the radiomap data collection process until the end of the radiomap data collection process and corresponding time information may be stored in association with the collected radiomap data. Such time information may be distinguishable from time information associated with different tracks and may thus allow for recognizing individual tracks in a later analysis process. In addition or alternatively, explicit track identification information may be associated with the collected radiomap data, for example when the user starts the radiomap data collection process and/or when the user ends the radiomap data collection process.

While in an embodiment of the present invention, a user may manually start and end a data collection process when collecting radiomap data for building of a radiomap of a structure in a crowdsourcing process, an alternative embodiment of the present invention is applicable to cases, where crowdsourcing processes may run automatically without user intervention. Such automatized crowdsourcing processing may - with user consent - be implemented in various types of applications e.g. running on a user's mobile device. Such applications may include social media applications, health monitoring applications, etc. Such automatized crowdsourcing processing may further - with user consent - be implemented in an operating system e.g. of a mobile device. It is thus noted that in accordance with the invention, a user is not required to input floor information during a crowdsourcing process. Instead, crowdsourcing may in the latter embodiment run without human interaction, and the mobile device may for example capture sensor measurements such as barometer readings in addition to the collected fingerprint data. A machine learning processing may then build the radiomap layers from the crowdsourced tracks of fingerprints such that an association between the ground level with the radiomap layers may be performed in an automatized way.

Subsets of radiomap data corresponding to tracks along which corresponding mobile devices have moved while acquiring the radiomap data may be retrievable or recognizable from existing radiomap data also in alternative or additional different ways. For example, it may be possible to retrieve radiomap data acquired along a certain track by analyzing position information included in radiomap data because position information of the radiomap data acquired along the certain track may differ in a recognizable way from position information of radiomap data acquired along different tracks.

Yet another alternative or additional option may be that radiomap data is acquired in association with sensor data representative of sensor measurement results of one or more sensors of a respective mobile device. Such sensors may comprise a barometer, an accelerometer, a gyroscope, a motion sensor, a magnetometer, an audio sensor, a light sensor, a WLAN modem and/or a Bluetooth Low Energy (BLE) modem of a respective mobile device. For example, a track may correspond to a subset of radiomap data representative of one or more fingerprints, where a fingerprint comprises position information of the position of the fingerprint, at least one measurement result of at least one radio signal at this position (wireless access point identification information and/or signal quality information), and at least one measurement result (sensor measurement) of at least one sensor (e.g. of said barometer, an accelerometer, a gyroscope, a motion sensor, and/or a magnetometer) at this position. In such case, the subset may be retrievable or recognizable by analyzing such sensor data comprised by the radiomap data.

While in accordance with the above examples, tracks may be derived from radiomap data using suitable analysis processing, radio signals and sensor data of individual tracks may be stored separately from radiomap data. In particular, according to an embodiment of all aspects of the present invention, tracks of fingerprints may form a first data set, and a radiomap, which may be calculated based on these tracks of fingerprints may form another data set (a second data set), whereby these data sets may be stored separately. This embodiment may provide a simplified way of retrieving individual tracks in the data processing. Sensor data acquired along a track may be analyzed at an initial stage, e.g. during a fingerprint collection process when e.g. acquiring radiomap data along the track, e.g. to determine whether or not the track includes an outdoor/indoor transition. Alternatively or in addition, sensor data may be incorporated into the first data set or may be also stored separately, in a third data set

As mentioned, in accordance with the invention, the first track comprises a first position at a reference altitude and a second position inside of the structure. Hereby, it is to be noted that the first and the second positions may correspond to said initial position and said end position and may correspond to positions of the track in between said initial and said end positions. In an exemplary embodiment, the first position is outside of the structure (the building) and the reference altitude is a relative altitude indicating the first position to be at ground level. In such case, the track may be a track of a user (of a mobile device) moving from outside of a building into the building. It is noted that such tack may, however, also correspond to a track of a user moving (from the second position) from inside of the building out of the building (to the first position). In an exemplary alternative embodiment, the first position is inside of the structure (the building) and the second position is outside of the structure (the building), the reference altitude being a relative altitude indicating the second position to be at ground level. In such case, the track may correspond to a track of a user moving (from the first position) from inside of the building out of the building (to the second position). Similarly as before, the track may, however, be a track of a user moving from (the second position) outside of the building (to the first position) into the building.

As discussed above, if an association of radiomap data items, e.g. fingerprints, and/or radiomap data layers with relative altitude information of a structure such as a building is missing, it may be challenging to position a mobile device on a correct floor in particular in a multi-story building. In particular in case of structures such as multi-story buildings, a correct association between the abstract radiomap data layers with floor levels of the building may be of particular interest as it may for example enable correct positioning of a caller of an emergency call with respect to a ground floor of the building. In particular in the case where the first position is outside of the structure and the reference altitude is a relative altitude indicating the first position to be at ground level, knowledge that the first position and the second position are on a same track (e.g. from outside of a building into the building or vice versa), may be used to associate the radiomap data of the second position inside of the building with relative altitude information of the structure (e.g. with an indicator indicating that the second position is at a ground floor of the structure) based on the reference altitude of the first position (which in this case is at a ground level outside of the building). In other words, such knowledge that a track is a track between an outside position (e.g. at a ground level of a building) and an inside position (inside of the building) enables a machine learning processing that associates the physical ground level of the building with a corresponding radiomap layer of the building. Such association can then be added to radiomap data of the building and can be used when obtaining a position estimate of a mobile device inside of the building to derive a floor (relative floor information) on which the mobile device is located. To calculate said position estimate with the relative floor information, only radio signal measurements are needed from the mobile device in question.

It is noted that this example may be extendable to cases where the first position is outside of a structure such as a building at a different reference altitude (e.g. at a basement level). Such extension is possible for example in cases where a processing can be implemented to recognize that such reference altitude is different from the ground level and to recognize the relation of said reference altitude and the ground level.

Thus, in accordance with the invention, the at least one apparatus is configured for

- associating or causing associating the radiomap data of/corresponding to/acquired at the second position with relative altitude information of the structure (e.g. a floor index/identifier) based on the reference altitude (e.g. ground floor) of the first position.

In other words, the at least one apparatus is configured to find an association between the abstract radiomap data and real-world relative altitude information of the structure based on said first position and said second position, where the second position is inside of the structure and both the first position and the second position are on the same track. Hereby, associating or causing associating the radiomap data with relative altitude information may be understood to mean for example storing or causing storing the radiomap data with relative altitude information. For example, associating a fingerprint of (e.g. acquired at) the second position with relative altitude information may be understood to mean that the fingerprint further includes said relative altitude information, e.g. is stored with this relative altitude information or with reference to this relative altitude information.

Further, for example, if the first position is a position outside of the structure, the track including the first position and the second position is a track entering or leaving the structure such that it is possible to associate the radiomap data acquired at the second position with relative altitude information of the structure (e.g. a floor index or indicator) with the reference altitude of the first position. Hereby, in an exemplary embodiment, the reference altitude of the first position maybe ground level (at a corresponding side of the structure) and the associating or causing associating associates the radiomap data of the second position in this case with relative altitude information of the structure indicative of the ground floor (e.g. depending on a country with "0" or "1", or with "ground floor", "ground level", etc.). In other words, in accordance with an exemplary embodiment, the at least one apparatus is configured for

- associating or causing associating the radiomap data of/corresponding to/acquired at the second position with relative altitude information of the structure indicating the second position to be at a ground floor of the structure when the first position is at a ground level of the structure.

Such associating the radiomap data of the second position with relative altitude information of the structure (e.g. the building) thus enables informing e.g. a user of a mobile device on which floor of a building the user is, whereby the information may be in accordance with a naming scheme of a country in which the building is located. Hereby, a translation of the relative floor information into such naming scheme may be performed by the processing of positioning the user based on the acquired radio signals (in the positioning phase). The translated naming scheme may be used when the information is provided to the user e.g. via a user interface of the mobile device which may display/describe the translated floor information to the user. A corresponding naming scheme used in a particular country may correspond to whether a ground floor is referred to e.g. as "0", or "1", or "G", or "ground floor", etc. Hereby, one possibility to provide this information to the user may be that the radiomap includes relative floor information to be displayed to the user (e.g. "0" meaning ground floor, "1" meaning the 1st floor above the ground, etc.). Another possibility may be that the radiomap includes relative floor information which is translated at the positioning phase or before the position estimate is displayed at the user interface (e.g. "0" is displayed in translated form as "G" in a particular country). Yet another possibility is that the radiomap may contain localized floor information (e.g. "G" instead of "0").

Thus, by analyzing tracks which include outdoor/indoor transitions, it is possible to find matches between ground floor and the corresponding radiomap layer. Thereby, it becomes possible to associate at least one layer of radiomap data (at the crowdsourcing stage in case the at least one apparatus of the first aspect is a mobile device and/or at a stage where radiomap data exists and the at least one apparatus of the first aspect is a server and/or a mobile device enabled to analyze and adapt the existing radiomap data) with the ground floor of the structure. It is to be noted that more than one layer may be associated (e.g. at different sides of a structure) with the ground floor for example in a case in which the structure is on a raked surface. If radiomap data includes such association, when a mobile device is positioned based on radio signal measurements and said radiomap, it is possible to deduce on which floor the device resides, the floor information being relative to the ground level. This is useful in particular in case when first responders are to be guided to find the above mentioned emergency caller, as for example a call center is enabled to instruct the first responders to look for the person, for example on the 7th floor above the ground level. It is to be noted that this type of relative floor information can be used with different buildings and in different countries, regardless of different styles of numbering the floors (e.g. whether the floor above the ground floor is called as 1st floor or 2nd floor).

In an exemplary embodiment, the radiomap data comprises at least two radiomap data layers respectively corresponding to a respective absolute altitude and/or to an absolute altitude range, one of the at least two radiomap data layers comprising the radiomap data of the second position, the method comprising:

- associating or causing associating at least part of the radiomap data layer comprising the radiomap data of the second position with the relative altitude information of the structure based on the reference altitude of the first position.

For example, radiomap data may be obtained comprising a plurality of radio data layers, where each radio data layer corresponds to a floor of a structure such as a multi-story building. In case that the first position is for example outside of the structure and the reference altitude of the first position is ground level, the radiomap data layer which includes the radiomap data of the second position is associated with corresponding relative altitude information of the structure, in this exemplary case with a ground floor indicator (e.g. "0", "1" or "ground"). Given this, layers of the radiomap data corresponding to a larger altitude may be counted and labeled based on the layer associated with the ground floor indicator. A corresponding label (e.g. first above ground, second above ground, third above ground, and so on) may then be associated with each one of the following layers, e.g. stored with each one of the following layers as radiomap data. Thus, when a mobile device is positioned (i.e. when a position estimate of the mobile device is obtained) based on the so generated radiomap data, for example using absolute or relative altitude information of the mobile device in combination with the measurement results, the mobile device may be positioned horizontally and vertically with respect to the floors of a multi-story building.

It is to be noted that a radiomap data layer corresponding to an absolute altitude and/or to an absolute altitude range is understood to relate to a collection (e.g. a cluster) of radiomap data that is at least sufficiently distinguished in terms of altitude information of the respective radiomap data items, e.g. of the respective fingerprints, from different collections of radiomap data (different radiomap data layers). Thereby, a collection of radiomap data may correspond to a cluster of radiomap data determined e.g. from global radiomap data of a structure including two or more floors using an appropriate clustering algorithm. Radiomap data comprised by one radiomap data layer may include sensor data of a barometer (for example each radiomap data item such as a fingerprint may comprise its own sensor data) that is distinguishable from corresponding sensor data of a different radiomap data layer. In other words, there may for example be a detectable or noticeable gap between such sensor data of one radiomap data layer and corresponding sensor data of another radiomap data layer. Similarly, there may for example be a detectable or noticeable gap between altitude values (in particular absolute altitude values) of one radiomap data layer and corresponding altitude values of another radiomap data layer.

In an exemplary embodiment, the first position is determined to be at the reference altitude and the second position is determined to be inside of the structure based on at least one measurement result acquired with a sensor comprising at least one of

- a barometer;
- a gyroscope;
- an accelerometer;
- a motion sensor;
- a magnetometer;
- an audio sensor;
- a light sensor;
- a WLAN modem;
- a Bluetooth Low Energy (BLE) modem.

For example, measurement results of a barometer (pressure) of a mobile device acquired with radiomap data while moving along said first track including said first and said second position may be analyzed. A noticeable change in pressure between the first position and the second position may be an indication that the first position is outside of the structure and that the second position is inside of the structure. In typical cases, multi-story buildings may have air conditioning, which may cause pressure inside of the building to be lower than outside of the building. Thus, a change of pressure is noticeable when moving along a track from a position outside the building to a position inside the building and may thus be one indication of an indoor / outdoor transition. In order to improve analysis results, such pressure change may be mathematically modeled (e.g. based on empirical field tests) and actual data comprised by radiomap data may then be compared to such mathematical model. In other words, in addition to the described pressure change, an outdoor/indoor transition may be detectable based on a sudden change in the environment measured with any one (or any combination of) the above sensors, e.g. a sudden change in the audio environment, a sudden change in the light environment, a sudden change in the signal strength of WLAN or BLE signal(s) when moving. Compare with the claim 5

Thus, in an exemplary embodiment, the at least one apparatus is further configured for:

-    determining the first position to be at the reference altitude and the second position to be inside of the structure based on a change in barometric pressure, an audio environment, a light environment, a signal strength of a WLAN or BLE signal between the first position and the second position.

Similarly, data from the other sensors mentioned above (from the gyroscope, the accelerometer, the motion sensor and the magnetometer) may be analyzed for example to determine behavior of a user carrying the mobile device while acquiring fingerprints along the first track. For example, all of these sensors, each by itself or two or more in combination may be used to determine if a user has first moved and then has stayed at a certain position for a given time. Changes in audio environment, light environment, and/or signal strength of WLAN and/or BLE signals may similarly be applicable. It may thus be possible to detect that a user - after entering a building - stayed on the ground level for a given time.

In this exemplary embodiment, at least one, some or all of said sensors may be comprised by a mobile device used at least for acquiring the radiomap data along said part of the first track comprising the first position and the second position. While acquiring fingerprints at least at the first position and at the second position, said mobile device may be enabled to store corresponding results of sensor measurements acquired at at least the first position and at the second position in combination with or with reference to the respective fingerprints acquired at said positions. In other words, in an exemplary embodiment the at least one fingerprint further comprises a measurement result of at least one of

-    the barometer;
-    the gyroscope;
-    the accelerometer;
-    the motion sensor;
-    the magnetometer;
-    the audio sensor;
-    the light sensor;
-    the WLAN modem;
-    the Bluetooth Low Energy (BLE) modem.

As mentioned above, a ground level, e.g. a street level in front of a building, may correspond to a certain floor when the building is approached from one side, however, may correspond to a different floor when the building is approached from a different side, e.g. when the building is built on a raked surface. For example, when entering a building from one side and walking across the building, it may be necessary to walk up stairs or to take an elevator to an upper floor to exit the building on the other side. In particular for such cases, it may be useful to associate a radiomap of the building with a global coordinate system such as a geographic coordinate system or a geodetic coordinate system. For example, a geographic coordinate system is a coordinate system that may enable specifying positions on earth by a set of numbers, letters or symbols. The coordinates may be chosen such that one of the numbers represents a vertical position and two or three of the numbers represent a horizontal position.

Alternatively, a geographic position may be expressed in a combined three-dimensional Cartesian vector. Example coordinates of a geographic coordinate system include latitude, longitude and elevation that are useful to specify a position on earth. An exemplary geodetic system is the World Geodetic System (WGS) which represents a standard for use in cartography, geodesy and satellite navigation including GNSS, in particular GPS. A particular useful geodetic system is a WGS-84 system.

Thus, in an exemplary embodiment, the at least one apparatus is further configured for:

-    associating or causing associating at least the radiomap data of the second position with map data of a geographic and/or geodetic system (in particular a WGS-84 system).

For example, said associating at least the radiomap data of the second position with map data of the global coordinate system may be performed with support of a GNSS system. For example, as positioning based on GNSS satellites may be performed with sufficient accuracy outdoors, it may be possible to associate at least the first position outside of the building with an outdoor map that is based on a global coordinate system. By tracking the track including the first position and the second position, for example using positioning of the mobile device based on sensors of the mobile device such as gyroscope, accelerometer, motion sensor and magnetometer and/or using indoor positioning based on radio measurements and radiomap, it may then become possible to associate the outdoor map and the local radiomap of the structure.

In an exemplary embodiment, a radiomap data layer different from the radiomap data layer comprising the radiomap data of the second position comprises radiomap data acquired at least along part of a second track comprising a third position inside of the structure and a fourth position, the method further comprising:

- if the first and the fourth position are at a ground level of the structure, associating or causing associating at least the radiomap data of the third position and at least the radiomap data of the second position with same relative altitude information of the structure.

In the latter case, a ground level outside a structure, e.g. at the side of the structure where the first position is located, is different from a ground level outside the structure, e.g. at the side of the structure where the fourth position is located. In such case, a layer of radiomap data corresponding in altitude to the first position may be different in terms of altitude (e.g. above or below) from a layer of radiomap data corresponding in altitude to the fourth position. As in case of the above discussed first track, use of the second track including the fourth position and the third position inside of the structure may help to find a match between the ground level of the fourth position with a layer of radiomap data including the third position. Thus, even though the radiomap data of the second position (acquired at the second position) and the radiomap data of the third position (acquired at the third position) pertain to different layers of radiomap data, both the radiomap data of the second position and the radiomap data of the third position are associated with same relative altitude information of the structure indicating the ground floor (e.g. "0", "1" or "ground").

In other words, each radiomap layer of a structure (e.g. a building) may be associated with a unique relative layer index (based on the knowledge which layer corresponds to a ground floor, this knowledge being derived based on a track between an outside and an inside position as described above). In examples where a building has one or more entrances only at one level, the radiomap layer of this level is then associated with the ground level. However, as described, cases exist where a building may have entrances at two or more levels. In such case, for example, the ground level can be associated with corresponding edges of the corresponding radiomap layers.

For example, in case a building has only one entrance on radiomap layer 2 on the south side. In this case, the entire radiomap layer 2 can be associated with the ground level.

In a different example, a building may have an entrance on radiomap layer 2 on the south side and another entrance on radiomap layer 1 on the east side. In such case, the south edge of radiomap layer 2 may be associated with the ground level and the east edge of radiomap level 1 may be associated with the ground level. When using radiomap data with this additional information, when performing positioning thereon, the decision on which floor a mobile device is located is taken based on whether the position estimate is associated with the floor information based on the south edge or east edge. The decision may be e.g. based on (i) which edge (south or east) is closer to the horizontal position estimate, or (ii) the decision may be based on which entrance point (south or east entrance) is closer to an auxiliary location (which could represent e.g. a destination of a calculated route), or (iii) the decision may be based on which entrance point is used most often and may therefore represent the main entrance.

In particular in connection with this embodiment, it may be useful to associate the local radiomap of the structure with a global coordinate system. In other words, in said exemplary embodiment, the at least one apparatus is further configured for:

- associating or causing associating at least the radiomap data of the second position and at least the radiomap data of the third position respectively with corresponding map data of a geographic and/or geodetic system.

Thereby, it is to be noted that the geographic system and the geodetic system are as described above. Given this association, it may be possible to specify that a position (e.g. the second position) is at ground level at a particular side of a building (for example "Northwest" or "Victory Street Side" or the like). This may be enabled by the association as in the latter case the first position being on the same track as the second position may be determined to be on the northwest side of the building and/or at a side of Victory Street based on said global coordinate system. Likewise, it may be possible to specify that another position (e.g. the third position) is at ground level at a different side of the building (for example "Southeast" or "Main Street Side"). Again, this may be enabled by the association as in this case, the third position being on the same track as the fourth position may be determined to be on the south east side of the building and/or at a side of Main Street based on said global coordinate system. Thus, in case that a person performing an emergency call needs to be located in a multi-story building, it may be possible based on radiomap data including such association with a global coordinate system to inform first responders that the person is at a floor which is for example "two floors above the ground level in case of arrival at the building from the Main Street, or one floor above the ground level in case of arrival at the building from the Victory Street".

As mentioned above, in an example embodiment, the first position is outside of the structure (e.g. the building) and the reference altitude of the first position corresponds to a ground level of the structure. In this exemplary embodiment, the associating or causing associating the radiomap data of the second position with relative altitude information of the structure associates the radiomap data of the second position with a floor identifier identifying a ground floor of the structure. Further, in an exemplary embodiment, said fourth position is outside of the structure (e.g. the building). In this case, the associating or causing associating at least the radiomap data of the third position and at least the radiomap data of the second position with same relative altitude information of the structure associates the radiomap data of the second position and the radiomap data of the third position with a floor identifier identifying a ground level of the structure.

Thus, by analyzing radiomap data for such tracks comprising outdoor/indoor transition(s), it is possible to find matches e.g. between ground level (s) of a structure and corresponding layers of radiomap data of the structure. It thus becomes possible not only to create radio signal based layer models for structures such as buildings via data crowdsourcing, but also to associate such layers with respect to the ground level without manual user input in particular when data are crowdsourced in massive scale. Associations between a floor level of the building and radiomap data layers of a radiomap of the building can be utilized when positioning mobile devices based on the radiomap including the association to discover the floor level relative to the ground level where mobile devices subject to the positioning are located. This can be in particular useful in cases of emergency when police or firemen are guided to a certain floor in a building.

As mentioned above, the at least one apparatus in accordance with the second aspect of the invention is configured for:

- obtaining or causing obtaining radio measurement data representative of a radio environment at a position of the at least one apparatus.

In an exemplary embodiment, said at least one apparatus in accordance with the second aspect may be a mobile device that is positioned based on existing radiomap data. In an exemplary embodiment, the mobile device is an Internet-of-Things (IoT) device, a smart home device, a smartphone, a tablet computer, a notebook computer, a smart watch, or a smart band.

For positioning, the at least one apparatus may perform measurements on the radio environment, i.e. may measure one or more radio signals observable at a position. The at least one apparatus may thus obtain identification information of one or more corresponding wireless access points transmitting the one or more radio signals and/or signal quality information as discussed above. The at least one apparatus, e.g. the mobile device, may then relate the measurement results to a radiomap stored at the at least one apparatus or may communicate the measurement results to a server to be related to a radiomap stored at the server.

In accordance with embodiments of, a mobile device may be enabled to communicate with a server (or vice versa) via a wireless and/or a wired connection. Hereby, a wireless connection may correspond to a communication path or link in a wireless communication network, in particular a terrestrial wireless communication network like a Wireless Local Area Network (WLAN) or a cellular network. WLAN is for example specified by the standards of the IEEE 802.11 family (http://www.ieee.org/). A cellular network may for example be a mobile phone network like a 2G/3G/4G/5G cellular communication network. The 2G/3G/4G/5G cellular radio communication standards are developed by the 3GPP and presently available under http://www.3gpp.org/. A wireless connection may further include a Device-to-Device (D2D) communication path (e.g. involving vehicles, mobile devices, Road Side Units (RSU) or IOT devices). Further, a wired connection may correspond to a communication path or link in a wired communication network employing wire-based communication technology and may correspond to a telephone network connection, a cable television connection, an internet connection, a fiber-optic connection or an electromagnetic waveguide connection.

Relating the measurement results to the radiomap yields a position of the mobile device based on a correspondence between the measurement results presently acquired and previous measurements of different mobile devices having collected the radiomap data stored as the radiomap. The at least one apparatus, e.g. the mobile device, thus obtains a position estimate either based on the radiomap stored at the at least one apparatus, e.g. the mobile device, or from the server. In other words in accordance with the second aspect of the present invention, the at least one apparatus, in particular the mobile device, is configured for:

- obtaining or causing obtaining a position estimate of the at least one apparatus based on the radio measurement data and radio map data representing at least part of a structure.

Thereby, as mentioned above, the radiomap data (based on which the at least one apparatus, e.g. the mobile device, is positioned) comprises radiomap data acquired at least along part of a track comprising a first position at a reference altitude and a second position inside of the structure. Said radiomap data has been acquired at least along part of the track e.g. by a different mobile device when collecting the radiomap data for generating the radiomap. Thereby, the second position is associated with relative altitude information of the structure based on the reference altitude of the first position. For example, the relative altitude information of the structure may indicate that the second position is at a ground level of the structure (e.g. "0", "1" or "ground") and said first position may be outside of the structure.

It is to be noted that in accordance with embodiments of all aspects of the present invention a wireless access point may be or comprise at least one of:

- a Wireless Local Area Network, WLAN, access point;
- a Bluetooth access point; or
- an access point of a cellular communications network.

Hereby, a cellular communications network may for example be a mobile phone network like a 2G/3G/4G/5G cellular communication network. The 2G/3G/4G/5G cellular radio communication standards are developed by the 3GPP and presently available under http://www.3gpp.org/.

In accordance with an exemplary embodiment of the second aspect, the radiomap data comprises at least two radiomap data layers respectively corresponding to a respective absolute altitude and/or to an absolute altitude range, one of the at least two radiomap data layers comprising the radiomap data of the second position, wherein at least part of the radiomap data layer comprising the radiomap data of the second position is associated with the relative altitude information of the structure based on the reference altitude of the first position.

As explained in more detail above, in case the first position is outside of the structure, based on the track including the first position and the second position inside of the structure, it is possible to associate the layer of radiomap data comprising the second position with relative altitude information (e.g. a floor index or identifier) identifying said layer to be a layer corresponding to the ground floor of the structure. When performing positioning of a mobile device based on radiomap data including such association, a position of the mobile device may be advantageously determined to be on a certain floor with reference to the ground floor (e.g. "the mobile device is on the second floor above the ground floor").

Further, in an exemplary embodiment of the second aspect, at least the radiomap data of the second position is associated with map data of a geographic and/or geodetic system. As explained above, in case part of radiomap data for example part of the radiomap data including the radiomap data of the second position, for example a layer of radiomap data or part of said layer, with a global coordinate system such as the WGS-84 may further enable representing a position of a mobile device with reference to a location or with reference to orientations of such global coordinate system. This may be advantageous in particular in case of emergencies where for example police or firemen are guided to a location of the emergency.

As discussed in detail above, by associating radiomap data, in particular the layers of radiomap data corresponding to floors of a structure such as a building, with relative altitude information with respect to the ground floor, it becomes possible to determine, for a position estimate, the correct floor identifier which has a meaning within the frame of an indoor map and for the end user, even though the position estimate is determined based on a radiomap, which is generated based on automatically crowdsourced radiomap data. As a result, a user can be presented with correct and meaningful floor identifier and with a correct floor of an indoor map using floor identifiers for referencing the respective floors of the indoor map.

It is to be understood that the presentation of the invention in this section is merely by way of examples and non-limiting.

Other features of the invention will become apparent from the following detailed description considered in conjunction with the accompanying figures. It is to be understood, however, that the figures are designed solely for purposes of illustration and not as a definition of the limits of the invention, for which reference should be made to the appended claims. It should be further understood that the figures are not drawn to scale and that they are merely intended to conceptually illustrate the structures and procedures described herein.

**BRIEF DESCRIPTION OF THE FIGURES**

Fig. 1    is a diagram of a system for performing exemplary embodiments of the invention;

Fig. 2A   is a schematic illustration of a radio environment of a mobile device;

Fig. 2B   is an exemplary illustration of a radiomap;

Fig. 3    is a block diagram of a server of Fig. 1 as an example of an apparatus according to the first aspect of the invention;

Fig. 4    is a block diagram of a mobile device of Fig. 1 as an example of an apparatus according to the second aspect of the invention;

Fig. 5A   is a schematic side-view of a structure according to an exemplary embodiment;

Fig. 5B   is a schematic side-view of a structure according to an exemplary embodiment;

Fig. 5C   is a schematic side-view of a structure according to an exemplary embodiment;

Fig. 5D   is a schematic top-view of a structure according to an exemplary embodiment;

Fig. 5E   is a schematic top-view of a structure according to an exemplary embodiment;

Fig. 6A   is a flow chart illustrating an example of a method according to the first aspect of the invention;

Fig. 6B   is a flow chart illustrating an example of a method according to the second aspect of the invention; and

Fig. 7    is a schematic illustration of examples of tangible storage media according to the invention.

**DETAILED DESCRIPTION OF THE FIGURES**

The following description serves to deepen the understanding of the present invention and shall be understood to complement and be read together with the description of example embodiments of the invention as provided in the above SUMMARY section of this specification.

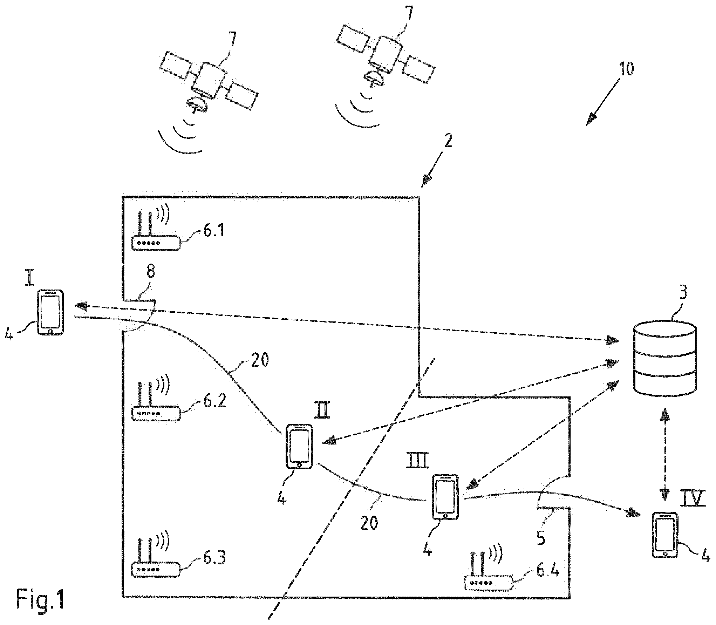

Fig. 1 is a diagram of a system 10 for performing exemplary embodiments of the invention. System 10 comprises a server 3 (an example of the at least one apparatus according to the first aspect of the invention, e.g. of a positioning server) and a mobile device 4 (an example of the at least one apparatus according to the second aspect of the invention). Mobile device 4 is illustrated exemplary moving along track 20 from a first position I to a fourth position IV for example while being outside (e.g. at first position I or at fourth position IV) and/or inside (e.g. at second position II or at third position III) of structure 2 (e.g. of a building). Mobile device 4 may move along said track 20 during a positioning procedure of mobile device 4 based on a radiomap of structure 2 and its closer vicinity (at least including positions I and IV) stored at mobile device 4 and/or at server 3. In an alternative example, mobile device 4 may move along track 20 during a crowdsourcing procedure for generating a radiomap of structure 2 (in this exemplary case, mobile device 4 may correspond to a further example of the at least one apparatus according to the first aspect). Reference numerals 5 and 8 indicate exemplary entrance/exit positions where mobile device 4 may enter/exit structure 2 when moving (e.g. being moved, carried by a user) along track 20. It is to be noted that the dashed line in between the second position II and the third position III of mobile device 4 indicates schematically that the part of the first track including the first position I and the second position II inside of structure 2 is on one floor of structure 2 and that the part of the second track including the third position III and the fourth position IV inside of structure 2 is on a different floor (e.g. above or below). In other words, mobile device 4 may enter structure 2 via entrance 8 on one floor which corresponds to a ground floor on the respective side of structure 2 and may leave structure 2 via entrance 5 on a floor which is a different floor of structure 2, however, also corresponds to a ground floor of structure 2 on the other side. Thereby, e.g. at a position schematically indicated by the dashed line between position II and position III, mobile device 4 may change the respective floors using stairs or an elevator (not shown in the figure).

When used in a crowdsourcing procedure, mobile device 4 may be used for collecting fingerprints of the radio environment (e.g. radio signals transmitted/broadcasted by wireless access points 6.1, 6.2, 6.3, 6.4) e.g. in and around structure 2. As mentioned above, wireless access points in accordance with embodiments of all aspects of the present invention correspond to or comprise Wireless Local Area Network, WLAN, access points, a Bluetooth access point; and/or an access point of a cellular communications network. Hereby, a cellular communications network may for example be a mobile phone network like a 2G/3G/4G/5G cellular communication network. The 2G/3G/4G/5G cellular radio communication standards are developed by the 3GPP and presently available under http://www.3gpp.org/.

When acquiring radiomap data for generating or supplementing a radiomap in a crowdsourcing procedure, acquired position information may be based on signals received from satellites 7 of a global navigation satellite system (GNSS). As such signals may only or primarily be available outside of structure 2 (in particular at positions I and IV), acquired position information may alternatively or additionally be based on sensors of the respective mobile device 4, such as a barometer, a motion sensor, an accelerometer, a magnetometer and/or a gyroscope. Fingerprints collected by mobile device 4 when moving along track 20 may be stored at mobile device 4 or may be communicated to server 3 (the communication being conceptually exemplarily indicated by dashed arrows in Fig. 1).

In an alternative example, track 20 may represent a track along which mobile device 4 moves while a position estimate of mobile device 4 obtained based on a radiomap of structure 2 and its vicinity and radio signals of wireless access points 6.1, 6.2, 6.3, 6.4 is acquired/obtained by mobile device 4 e.g. to be displayed on a display of mobile device 4 superimposed e.g. on an indoor map of structure 2.

Mobile device 4 may be enabled to communicate with server 3 via a wireless or a wired network connection (as exemplarily indicated by dashed arrows in the figure). As mentioned above, a wireless connection may correspond to a communication path or link in a wireless communication network, in particular a terrestrial wireless communication network like a Wireless Local Area Network (WLAN) or a cellular network. WLAN is for example specified by the standards of the IEEE 802.11 family (http://www.ieee.org/). A cellular network may for example be a mobile phone network like a 2G/3G/4G/5G cellular communication network. The 2G/3G/4G/5G cellular radio communication standards are developed by the 3GPP and presently available under http://www.3gpp.org/. A wireless connection may further include a Device-to-Device (D2D) communication path (e.g. involving vehicles, mobile devices, Road Side Units (RSU) or IOT devices).

Further, a wired connection may correspond to a communication path or link in a wired communication network employing wire-based communication technology and may correspond to a telephone network connection, a cable television connection, an internet connection, a fiber-optic connection or an electromagnetic waveguide connection.

In the example case shown in Fig. 1, mobile device 4 may be enabled to communicate with server 3 using any one of or all of wireless access points 6.1, 6.2, 6.3, 6.4 being connected to server 3 e.g. via a local area network and/or the Internet or via a cellular communication network.

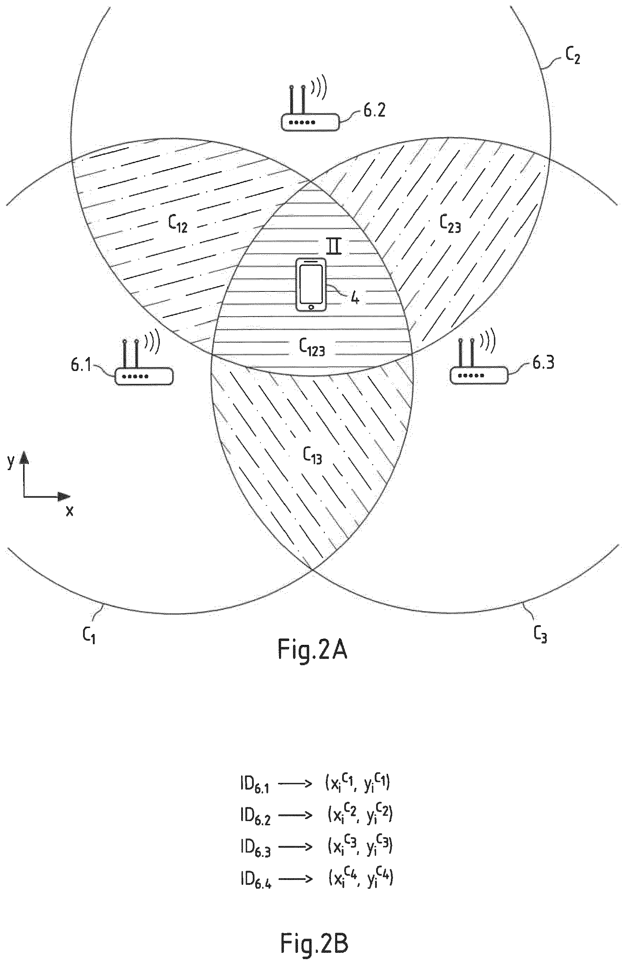

Fig. 2A exemplarily illustrates a simplified radio environment of mobile device 4 within structure 2 which may be used to estimate a position of mobile device 4, e.g. to obtain an estimate of the position of mobile device 4 in horizontal coordinates in longitudinal and latitudinal directions (x and y directions shown in Fig. 2A). For conciseness, only simplified radio signal ranges $C_1$, $C_2$, $C_3$

of wireless access points 6.1, 6.2, 6.3 are illustrated (the topology being simplified), the radio signal ranges simplified as overlapping circles. Fig. 2A illustrates areas, where respective radio signal ranges mutually overlap, i.e. area $C_{12}$ where radio signal ranges $C_1$ and $C_2$ overlap, area $C_{23}$ where radio signal ranges $C_2$ and $C_3$ overlap, area $C_{13}$, where radio signal ranges $C_1$ and $C_3$ overlap and area $C_{123}$, where radio signal ranges $C_1$, $C_2$ and $C_3$ overlap. As can be taken from Fig. 2A, when mobile device 4 acquires identification information of all wireless access points 6.1, 6.2, 6.3, based on the corresponding identification information, a position of mobile device 4 can be estimated to be within the area of overlap $C_{123}$. Similarly, if mobile device 4 would require only identification information of wireless access points 6.1 and 6.2, a position of mobile device 4 could be estimated to be within an area of overlap $C_{12}$.

As disclosed above, measurements of the radio environment when for example moving along track 20 as shown in Fig. 1 can also be used by mobile device 4 for building a new or for supplementing an existing radiomap. To this end, mobile device 4 may obtain identification information of wireless access points from which mobile device 4 receives radio signals based on the received radio signals and may associate the obtained identification information with position information of the position where mobile device 4 has received the radio signals. Position information of said position may be obtained by mobile device 4 for example using signals of GNSS satellites 7 (in particular when outdoors, e.g. when at the first position I or the fourth position IV). In particular when moving indoors (e.g. when at the second position II illustrated in Fig. 2A), such position information may be obtained in based on sensors of the mobile device 4, such as a barometer, a motion sensor, an accelerometer, a magnetometer and/or a gyroscope. Fig. 2B illustrates an exemplary non-limiting representation of a radiomap which may represent an indoor area of structure 2 of Fig. 1. As shown, identification information of wireless access points 6.1, 6.2, 6.3, 6.4, i.e. corresponding IDs ($ID_{6.1}$, $ID_{6.2}$, $ID_{6.3}$, $ID_{6.4}$) are stored (either at mobile device 4 and/or at server 3) in association with position information of positions where radio signals of the respective wireless access points are receivable. In the shown case, position information corresponds to horizontal coordinates in longitudinal and latitudinal directions. In the shown example, for example coordinates $x_i^{C_1}$, $y_i^{C_1}$ are x,y coordinates representative of positions $i$ where radio signals from wireless access point 6.1 are receivable. Similarly, $x_i^{C_j}$, $y_i^{C_j}$ are x,y coordinates representative of positions $i$ where radio signals from wireless access point 6.$j$ are receivable.

As mentioned, the concept illustrated using Fig. 2A and Fig. 2B is simplified and only intended to illustrate the concept. In addition to identification information, radio quality information, for example Received Signal Strength Indication, RSSI, and/or path loss information may further be stored with respective fingerprints. In such case, a fingerprint may further comprise "z"-information (representative e.g. of RSSI, and/or path loss information) and a single wireless access point may have a cone-shaped radiomap where a high signal strength may be associated with a small distance from the access point (large z-value at x, y=0) and where signal strength decreases with distance from the wireless access point. Thus, if upon positioning, a fingerprint is received by mobile device 4, such fingerprint may comprise identification information of three wireless access points and three corresponding RSSI-values. The additional RSSI information may be used to obtain a position estimate with higher accuracy.

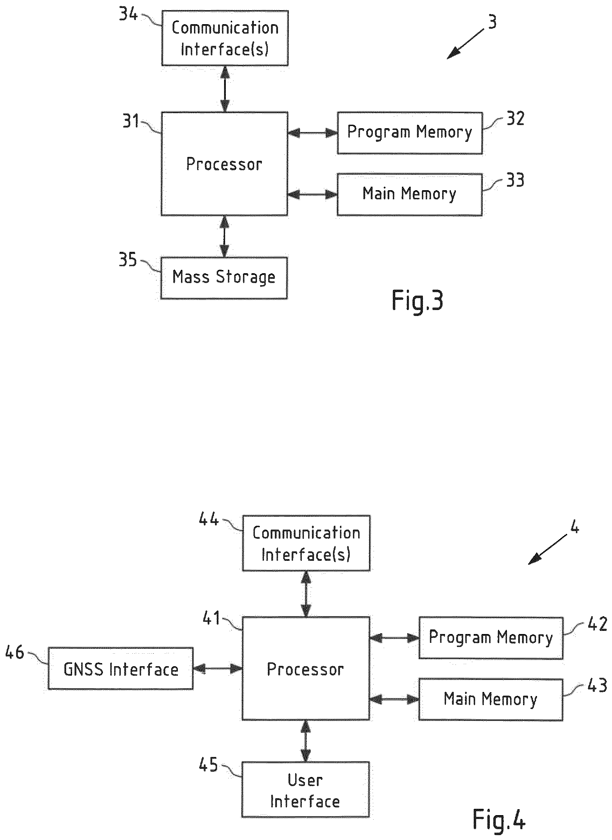

Fig. 3 is a block diagram of server 3 of Fig. 1 as an example of the at least one apparatus according to the first aspect of the invention.

Server 3 comprises a processor 31. Processor 31 may represent a single processor or two or more processors, which are for instance at least partially coupled, for instance via a bus. Processor 31 may use program memory 32 and main memory 33 to execute a program code stored in program memory 32 (for instance program code causing server 3 to perform embodiments of the different methods, when executed on or by processor 31). Some or all of memories 32 and 33 may also be included into processor 31. One of or both of memories 32 and 33 may be fixedly connected to processor 31 or at least partially removable from processor 31. Program memory 32 may for instance be a non-volatile memory. It may for instance be a FLASH memory, any of a ROM, PROM, EPROM and EEPROM memory or a hard disc, to name but a few examples. Program memory 32 may also comprise an operating system for processor 31. Main memory 33 may for instance be a volatile memory. It may for instance be a RAM or DRAM memory, to give but a few non-limiting examples. It may for instance be used as a working memory for processor 31 when executing an operating system and/or programs.

Processor 31 further controls one or more communication interfaces 34 configured to receive and/or send information. For instance, server 3 may be configured to communicate with mobile device 4 of system 10 of Fig. 1 (corresponding to mobile device 4 of Fig. 2A). Such a communication may for instance comprise receiving collected fingerprints, i.e. in particular access point identification information (e.g. $ID_{6.1}$, $ID_{6.2}$, $ID_{6.3}$, $ID_{6.4}$) and optionally signal quality information (e.g. corresponding RSSI values and/or path loss information for radio signals received from each respective wireless access point), from mobile device 4. Also, server 3 may be able to send e.g. a determined radiomap and/or a determined position estimate of mobile device 4 to mobile device 4 for the purpose of positioning of mobile device 4. The communication may for instance be based on a (e.g.

partly) wireless connection. The communication interface 34 may thus comprise circuitry such as modulators, filters, mixers, switches and/or one or more antennas to allow transmission and/or reception of signals. In embodiments of the invention, communication interface 34 is inter alia configured to allow communication according to a 2G/3G/4G/5G cellular communication system and/or a non-cellular communication system, such as for instance a WLAN network and/or a Bluetooth network.

Processor 31 further interfaces with a mass storage 35, which may be part of the server 3 or remote from server 3, and which may for instance be used to store one or more databases. For instance, server 3 may store, in a database, collected fingerprints collected by mobile device 4. Further, server 3 may store in a database indoor map data and/or radiomap data corresponding to one or more radiomaps e.g. including a radiomap representative of one or more floors of structure 2.

The components 32-35 of server 3 may for instance be connected with processor 31 by means of one or more serial and/or parallel busses.

Fig. 4 is a block diagram of mobile device 4 of Fig. 1 as an example of the at least one apparatus according to the second aspect of the invention.

Mobile device 4 comprises a processor 41. Processor 41 may represent a single processor or two or more processors, which are for instance at least partially coupled, for instance via a bus. Processor 41 may use program memory 42 and main memory 43 to execute a program code stored in program memory 42 (for instance program code causing mobile device 4 to perform embodiments of the different methods, when executed on processor 41). Some or all of memories 42 and 43 may also be included into processor 41. One of or both of memories 42 and 43 may be fixedly connected to processor 41 or at least partially removable from processor 41. Program memory 42 may for instance be a non-volatile memory. It may for instance be a FLASH memory, any of a ROM, PROM, EPROM and EEPROM memory or a hard disc, to name but a few examples. Program memory 42 may also comprise an operating system for processor 41. Main memory 43 may for instance be a volatile memory. It may for instance be a RAM or DRAM memory, to give but a few non-limiting examples. It may for instance be used as a working memory for processor 41 when executing an operating system and/or programs.

Processor 41 further controls one or more communication interfaces 44 configured to receive and/or send information. For instance, mobile device 4 may be configured to communicate with sever 4 of system 10 of Fig. 1. Such a communication may for instance comprise providing (transmitting) collected fingerprints from mobile device 4 to server 3. Also, mobile device 4 may be able to receive e.g. a radiomap or a determined position estimate of mobile device 4 from server 3 for the purpose of positioning. The communication may for instance be based on a (e.g. partly) wireless connection. The communication interface 44 may thus comprise circuitry such as modulators, filters, mixers, switches and/or one or more antennas to allow transmission and/or reception of radio signals. In embodiments of the invention, communication interface 44 is inter alia configured to allow communication according to a 2G/3G/4G/5G cellular communication system and/or a non-cellular communication system, such as for instance a WLAN network and/or a Bluetooth network.

Processor 41 further controls a user interface 45 configured to present information to a user of mobile device 4 to receive information from such a user, such as manually input position fixes, a site map or floor plan of the area or the like. User interface 44 may for instance be the standard user interface via which a user of mobile device 4 controls other functionality thereof, such as making phone calls, browsing the Internet, etc.

Processor 41 may further control a GNSS interface 46 configured to receive position information of a GNSS such as Global Positioning System (GPS), Galileo, Global Navigation Satellite System (i.e. "Globalnaja Nawigazionnaja Sputnikowaja Sistema", GLONASS) or Quasi-Zenith Satellite System (QZSS). In case of mobile device 4, the location information of GNSS interface 46 (potentially in connection with further sensors of mobile device 4, such as an inertial sensor, an accelerometer or gyroscope) may be used in order to obtain position information. Mobile device 4 may utilize GNSS interface 46 to communicate with GNSS satellites 7 of Fig. 1.

The components 42-46 of mobile device 4 may for instance be connected with processor 41 by means of one or more serial and/or parallel busses.

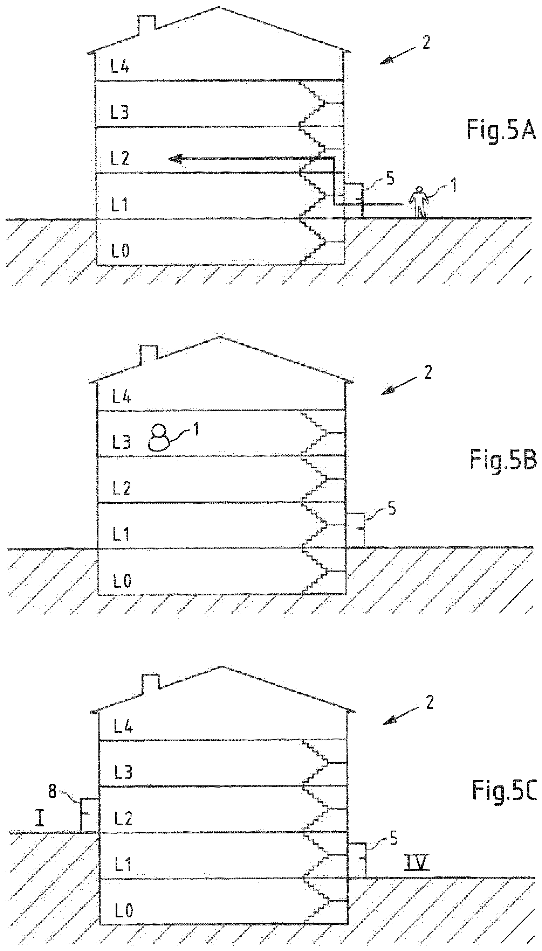

Figures 5A to 5E exemplarily illustrate structure 2 in exemplary embodiments. Fig. 5A exemplarily illustrates structure 2 where a radiomap of structure 2 has been acquired for example in a crowdsourcing procedure by a plurality of mobile devices that have moved around the different floors of structure 2 while collecting fingerprints of the radio environment of structure 2. As exemplarily shown, the corresponding radiomap of structure 2 has been structured into individual layers of radiomap data denoted in the figure as layers L0 to L4 where layer L0 corresponds to a basement of structure 4 and layer L1 corresponds to a ground floor of structure 2. Fig. 5A illustrates a case where user 1 enters structure 2 using entrance 5 on the ground floor and proceeds to the first floor above the ground floor, this first floor corresponding to the radiomap data layer L2.

As explained in detail above, by analyzing tracks included in radiomap data, it is possible to find tracks with outdoors/indoors transition(s) such as the track of user 1 in Fig. 5A. Such analysis enables determining matches between the ground level (outside of structure 2), a corresponding ground floor of the structure and of a corresponding radiomap data layer which in the case shown in Fig. 5A corresponds to radiomap data layer L1. As further explained in more detail above, one option to detect an indoor/outdoor transition is to analyze sensor data acquired by a mobile device moving along such track in combination with fingerprints acquired by the mobile device while moving along this track. For example, an option is to analyze barometer (pressure) readings of the mobile device while moving along the track. As explained above, in particular multi-story buildings may have air conditioning, which may cause pressure within the building to be lower than pressure outside of the building. A change in air pressure along a track may thus be an indication of an indoor/outdoor transition along this track. An additional option to identify a track with an indoor/outdoor transition is to analyze sensor data of further sensors such as accelerometers, to detect for example if a user - after entering a building - stayed on the ground level for some time.

Referring back to Fig. 5A, user 1 moves along the track indicated with the arrow from a position outside of structure 2 to a position on the first floor above the ground floor, this floor corresponding to radio data layer L2. User 1 may carry a mobile device used for a crowdsourcing procedure, i.e. for acquiring radiomap data (e.g. fingerprints) while moving along this track. In a later analysis, data acquired along this track may be used to match radio data layer L1 to the ground floor of structure 2.

Fig. 5B illustrates the structure 2 of Fig. 5A assuming that crowdsourcing has already taken place and that a radiomap corresponding to structure 2 exists, this radiomap being structured into layers L0 to L4 as in case of Fig. 5A. In the case shown in Fig. 5A, a person 1 is for example at his or her office room. When position estimate is calculated for person 1 e.g. based on the radio environment, it can be derived from this position estimate that person 1 is on layer L3 of the radiomap data. In case the above described analysis has already been performed and the radiomap data layers L0 to L4 have been associated to the real world floors of structure 2 with reference to the ground floor, it can be determined based on the so associated radiomap data that person 1 is at a floor which is two floors above the ground level. It becomes thus possible that for example when person 1 is in an emergency situation and makes an emergency call, the person 1 can be located based on the radio signals to reside at layer L3, and the call center can instruct the first responders to look for the person at a floor which is two floors above the ground level.

Fig. 5C illustrates the situation of Fig. 1, wherein a ground level at the first position I is different from a ground level of the fourth position IV. As shown, at the first position I near entrance 8, the ground floor corresponds to radio data layer L2 while at the fourth position IV near entrance 5, the ground floor corresponds to radio data layer in L1. As explained above, the present invention enables associating a ground floor of a structure 2 also in such situations where the ground around a building is a raked surface, and hence the ground level on different sides of the building matches with different building floors.

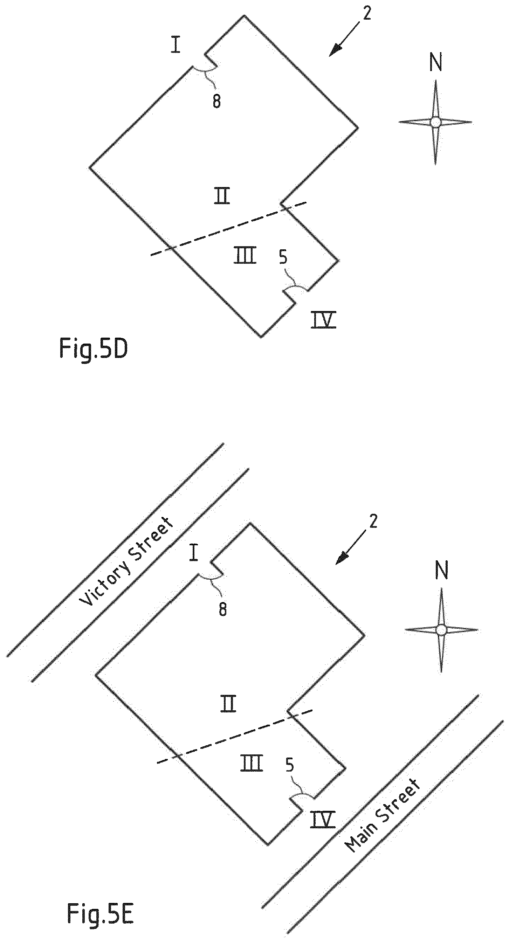

In particular in this kind of a case, when the aim is to express a relative floor indication with respect to the ground level, it is useful that a local radiomap of structure 2 (i.e. the crowdsourced radiomap data layers L0 to L4) may further be associated with a global coordinate system such as the WGS-84 system, for example with support of a GNSS system, e.g. using GNSS satellites 7 shown in Fig. 1. As a result, position information at the side of structure 2 e.g. corresponding to radiomap data of the second position II and position information at the opposing side of structure 2 e.g. corresponding to radiomap data of the third position III may be respectively expressed in a global coordinate system. Fig. 5D shows a top view of the situation depicted in side-view in Fig. 5C and in Fig. 1, where the local radiomap of structure 2 is associated with a global coordinate system as indicated by the compass. Given this, if a person in structure 2 makes an emergency call, he or she can be located based on the radio signals e.g. to reside for example at layer L3 of structure 2 of Fig. 5B (structure 2 on the raked surface). Given the additional information based on the global coordinate system as indicated in Fig. 5D, the call center can instruct the first responders to look for the person at e.g. a floor which is two floors above the ground level in case they arrive in the building from the South-East side (see Fig. 5D), or one floor above the ground level in case they arrive in the building from North-West side (see Fig. 5D).

As further illustrated in Fig. 5E, association of the local radiomap of structure 2 with said global coordinate system offers further possibilities that may help to enable fast location of the person in particular in emergency cases. As a further possibility, due to associating the radiomap of the building with respect to a global coordinate system, it is possible to place the radiomap on a real world map, and to identify for example the streets which are adjacent to the radiomap (i.e. adjacent to the building). Hence, similar to the case discussed in relation to Fig. 5D, as illustrated in Fig. 5E, it is possible to identify that the radiomap at the side of the first position I and the second position II is adjacent to the Victory Street, and that the radiomap at the side of the third position III and the fourth position IV is adjacent to the Main Street. As an example, if a person in the building makes an emergency call, he or she can be located based on radio signals (e.g. of wireless access points 6.1, 6.2, 6.3, 6.4) to be for example at layer L3 of structure 2 on the raked surface (see Fig. 5C), and the call center can instruct the first responders to look for the person at a floor which is two floors above the ground level in case they arrive in the building from the Main Street, or one floor above the ground level in case they arrive in the building from the Victory Street.

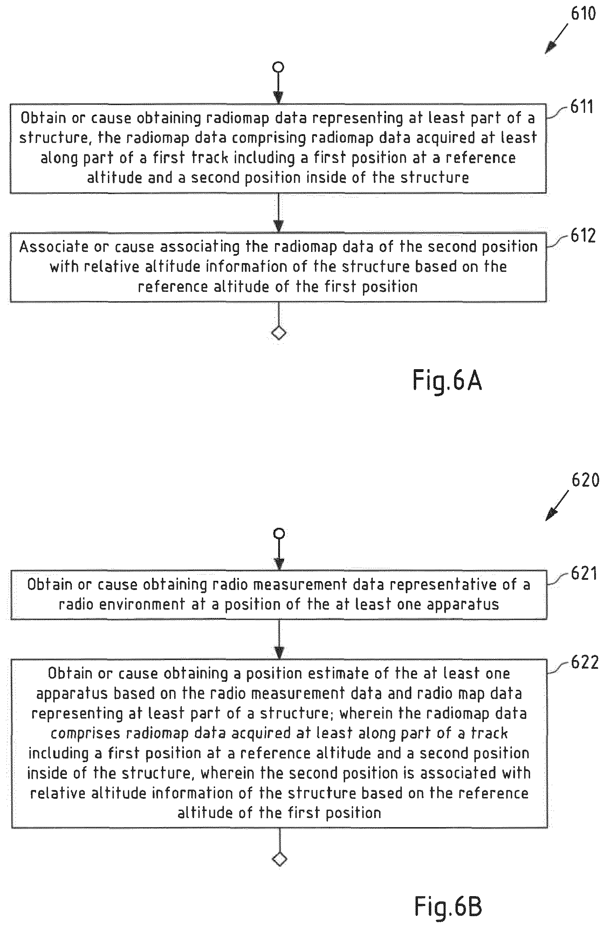

The methods of the different aspects will now be described in more detail with respect to Fig. 6A and 6B.

Fig. 6A is a flowchart 610 illustrating an example of a method according to the first aspect of the invention. Without limiting the scope of the invention, it is assumed in the following that server 3 (an example of the at least one apparatus according to the first aspect of the present invention) as disclosed above with respect to system 10 of Fig. 1 performs the steps of flowchart 610. It is to be understood that any step of flow chart 610 may be performed by any one or more than one apparatus (e.g. one or more processors of server 3 and/or one or more servers). Further, in a second alternative example of the first aspect the steps of flowchart 610 can be performed by a mobile device which is for example configured to analyze radiomap data stored at the mobile device to determine tracks that include outdoors/indoors transitions and that thus is configured to find matches between a ground floor of a building and a corresponding layer of radiomap data as disclosed above. Still further, in a third alternative example of the first aspect, the steps of flow chart 610 can be performed by a mobile device when collecting/acquiring radiomap data for generating new or supplementing existing radiomap data.

In step 611, server 3 obtains radiomap data representing at least part of a structure, e.g. of structure 2 of Fig. 1. Server 3 may for example obtain radiomap data stored at a corresponding memory of server 3 which has been previously acquired by one or more mobile devices e.g. in a crowdsourcing procedure. Thereby, the obtained radiomap data comprises (at least) radiomap data acquired at least along part of a first track including the first position at a reference altitude and the second position inside of the structure. Said radiomap data acquired along at least part of said first track may correspond to radiomap data acquired by a mobile device e.g. during said crowdsourcing procedure.

In step 612, server 3 associates (or e.g. one or more processors cause server 3 to associate) the radiomap data of the second position with relative altitude information of the structure based on the reference altitude of the first position. In this step, the radiomap data of the second position, e.g. a fingerprint acquired by a mobile device during a crowdsourcing procedure at this position, is associated (e.g. stored in combination with or with reference to) with said relative altitude information of the structure. For example, if the first position is a position outside of the structure such as position I of Fig. 1 outside of structure 2, the relative altitude information of the structure based on the reference altitude of the first position may be e.g. a floor indicator indicating the ground floor of the structure (e.g. "0", "1", "ground", or the like).

As discussed above in relation to Figs. 5A to 5E, by associating a radiomap data layer corresponding to the ground floor of a structure with corresponding relative altitude information with reference to said ground floor, it becomes possible to identify different layers of the radiomap data (e.g. simply by counting from said layer associated with the ground floor) with relative altitude information based on the ground floor of the structure (for example "third layer above ground floor").

Fig. 6B is a flowchart 620 illustrating an example of a method according to the second aspect of the invention. Without limiting the scope of the invention, it is assumed in the following that mobile device 4 (an example of the at least one apparatus according to the second aspect of the present invention) as disclosed above with respect to system 10 of Fig. 1 performs the steps of flowchart 620. It is to be understood that any step of flow chart 620 may be performed by any one or more than one apparatus (e.g. one or more processors of mobile device 4). For example, the steps of flow chart 620 maybe performed by mobile device 4 while performing positioning (while estimates of its position are obtained) based on measurements of a radio environment (e.g. the radio environment of structure 2 of Fig. 1) and based on corresponding radiomap data which has been generated previously by one or more mobile devices acquiring corresponding radiomap data for example of structure 2 e.g. in a crowdsourcing procedure.

In step 621, mobile device 4 obtains (or one or more processors of mobile device 4 cause mobile device 4 to obtain) radio measurement data representative of a radio environment at a position of mobile device 4. For example, when located at position II in Fig. 1, mobile device 4 may measure radio signals transmitted from wireless access points 6.1, 6.2 and 6.3 and may obtain for example identification information of said wireless access points ($ID_{6.1}$, $ID_{6.2}$, $ID_{6.3}$) based on the measured radio signals. By relating the obtained identification information to a radiomap stored for example at mobile device 4, as illustrated in Fig. 2A, mobile device 4 may be found to be positioned within an area $C_{123}$. The obtained measurement results, i.e. the obtained identification information, may similarly be communicated by mobile device 4 to server 3 to be related to a radiomap stored at server 3.

Thus, in step 622, mobile device 4 obtains (or one or more processors of mobile device 4 cause mobile device 4 to obtain) a position estimate (indicating that mobile device 4 is for example at a location within said area $C_{123}$) of the mobile device 4 based on the radio measurement data and radiomap data representing at least part of the structure. Thereby, the radiomap data comprises radiomap data acquired at least along part of a track including the first position at a reference altitude and the second position inside of the structure. As discussed in more detail above, said track may correspond to a track along which a mobile device has moved while acquiring radiomap data for generating or supplementing the radiomap based on which mobile device 4 is positioned (based on which a position estimate of mobile device 4 for is obtained) in step 622. Thereby, as discussed above, the second position is associated with relative altitude information of the structure based on the reference altitude of the first position. In other words, if the first position is a position outside of the structure (such as position I in case of structure 2 in Fig. 1), the second position is associated with relative altitude information indicating a ground level of the structure. Thus, when a position estimate is obtained of mobile device 4 based on the radiomap data including such association of the radiomap data with relative altitude information of the structure based on the reference altitude of the first position, in addition to horizontal position information and absolute altitude information such position estimate further includes information that allows to deduce on which mobile device 4 is located when the position estimate is obtained. It is possible for example to determine that the mobile device 4 is on floor "x" above or below a ground floor of structure 2.

It is thus possible not only to create radio signal based layer models for structures such as buildings by map data crowdsourcing, but also to associate such layers with respect to the ground level of a building without manual input required by users even when crowdsourcing is performed in massive scale. Such association of radiomap data layers with relative altitude information of structures can be utilized when locating mobile devices (when obtaining position estimates of mobile devices) based on radiomap data including such associations to discover the floor level relative to the ground level where the mobile devices reside. This can be very useful in particular in cases like emergency cases when police or firemen need to be guided to a certain floor in a building and where absolute altitude information is of limited use.

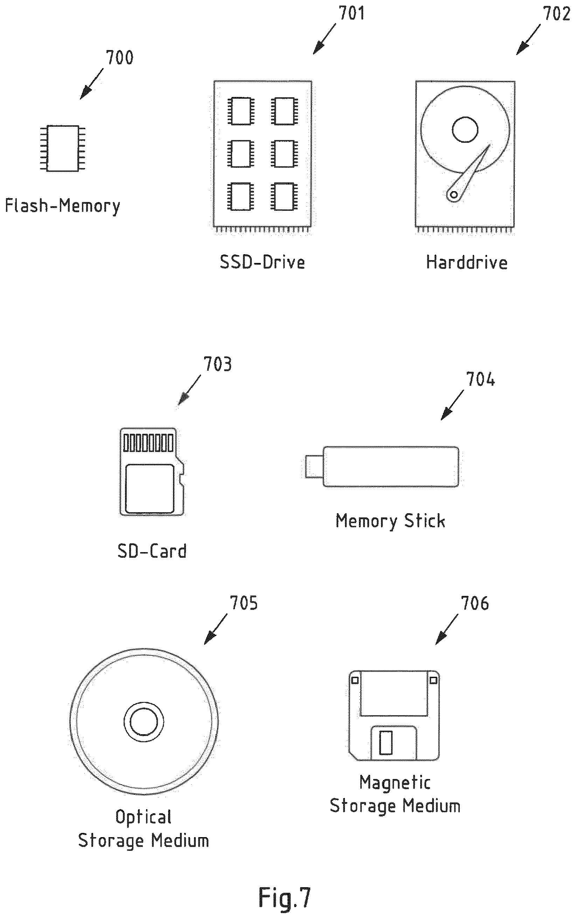

Fig. 7 is a schematic illustration of examples of tangible and non-transitory computer-readable storage media according to the present invention that may for instance be used to implement memory 32 of Fig. 3 or memory 42 of Fig. 4. To this end, Fig. 7 displays a flash memory 700, which may for instance be soldered or bonded to a printed circuit board, a solid-state drive 701 comprising a plurality of memory chips (e.g. Flash memory chips), a magnetic hard drive 702, a Secure Digital (SD) card 703, a Universal Serial Bus (USB) memory stick 704, an optical storage medium 705 (such as for instance a CD-ROM or DVD) and a magnetic storage medium 706.

The following example embodiments of the invention are also disclosed:

Embodiment 1
A method performed by at least one apparatus, in particular by at least one server and/or by at least one mobile device, the method comprising:

- obtaining or causing obtaining radiomap data representing at least a part of a structure, in particular a building, the radiomap data comprising radiomap data acquired at least along a part of a first track comprising a first position at a reference altitude and a second position inside of the structure (e.g. the building);
- associating or causing associating the radiomap data of, in particular acquired at, the second position with relative altitude information of the structure (e.g. the building), in particular a floor index/indicator, based on the reference altitude of the first position.

Embodiment 2
The method according to embodiment 1, wherein the radiomap data acquired at least along the part of the first track corresponds to radiomap data acquired by a mobile device moved, in particular by a user of the mobile device, along the first track when collecting at least part of the radiomap data representing the at least part of the structure, in particular in a crowdsourcing procedure.

Embodiment 3
The method according to any of embodiments 1 or 2, wherein the radiomap data comprises at least two radiomap data layers respectively corresponding to a respective absolute altitude and/or to an absolute altitude range, one of the at least two radiomap data layers comprising the radiomap data of the second position, the method comprising:

- associating or causing associating at least a part of the radiomap data layer comprising the radiomap data of the second position with the relative altitude information of the structure based on the reference altitude of the first position.

Embodiment 4
The method according to any of the preceding embodiments, wherein the first position is outside of the structure, and wherein the relative altitude information of the structure based on the reference altitude of the first position corresponds to an indication, e.g. a floor index/indicator, that indicates the second position to be on a ground floor of the structure and/or the radiomap data of the second position to be comprised by a layer of radiomap data corresponding to the ground floor of the structure.

Embodiment 5
The method according to any of the preceding embodiments, wherein the radiomap data comprises at least one fingerprint, the at least one fingerprint comprising position information of a position of the at least one fingerprint and at least one measurement result of at least one radio signal observable at the position of the fingerprint.

Embodiment 6
The method according to embodiment 5, wherein the position of the at least one fingerprint is a position at which the at least one fingerprint has been acquired by a mobile device when collecting at least part of the radiomap data representing the at least part of the structure.

Embodiment 7
The method according to any of embodiments 5 or 6, wherein the first track corresponds to a subset of the radiomap data, the subset comprising at least one fingerprint of/acquired at the first position and one fingerprint of/acquired at the second position.

Embodiment 8

The method according to embodiment 7, wherein the subset comprises fingerprints of/acquired at a plurality of positions of the first track.

Embodiment 9

The method according to any of embodiments 5 to 8, wherein the position information comprises horizontal position information (in particular data representative of coordinates in longitude and latitude directions) and/or vertical position information (in particular data representative of an absolute altitude).

Embodiment 10

The method according to any of embodiments 5 to 9, wherein the measurement result of a radio signal comprises identification information (in particular SSID and/or a MAC address) of a wireless access point transmitting (in particular broadcasting) the respective radio signal and/or signal quality information (in particular RSSI and/or a path loss indicator) of the radio signal observable at the position of the fingerprint.

Embodiment 11

The method according to any of the preceding embodiments, wherein the first position is determined to be at the reference altitude and the second position is determined to be inside of the structure based on at least one measurement result acquired with at least one sensor comprising at least one of

- a barometer;
- a gyroscope;
- an accelerometer;
- a motion sensor;
- a magnetometer;
- an audio sensor;
- a light sensor;
- a WLAN modem;
- a Bluetooth Low Energy (BLE) modem.

Embodiment 12

The method according to embodiment 11, wherein the at least one sensor is comprised by a mobile device used at least for acquiring the radiomap data representing at least the part of the structure along said part of the first track comprising the first position and the second position.

Embodiment 13

The method according to any of embodiments 11 to 12, wherein the at least one fingerprint further comprises a measurement result of at least one of

- the barometer;
- the gyroscope;
- the accelerometer;
- the motion sensor;
- the magnetometer;
- the audio sensor;
- the light sensor;
- the WLAN modem;
- the Bluetooth Low Energy (BLE) modem.

Embodiment 14

The method according to any of the preceding embodiments, further comprising:

- determining the first position to be at the reference altitude and the second position to be inside of the structure based on a change in barometric pressure, an audio environment, a light environment, a signal strength of a WLAN or BLE signal between the first position and the second position.

Embodiment 15

The method according to any of the preceding embodiments, further comprising:

- associating or causing associating at least the radiomap data of the second position with map data of a geographic and/or geodetic system.

Embodiment 16

The method according to embodiment 15, wherein the geodetic system is a WGS-84 system.

Embodiment 17

The method according to any of embodiments 2 to 16, wherein a radiomap data layer different from the radiomap data layer comprising the radiomap data of the second position comprises radiomap data acquired at least along a part of a second track comprising a third position inside of the structure and a fourth position, the method further comprising:

- if the first and the fourth position are at a ground level of the structure, associating or causing associating at least the radiomap data of the third position and at least the radiomap data of the second position with same relative altitude information of the structure.

Embodiment 18

The method according to embodiment 17, wherein the radiomap data acquired at least along the part of the second track corresponds to radiomap data acquired by a mobile device moved, in particular by a user of the mobile device, along the second track when collecting at least part of the radiomap data representing the at least part of the structure, in particular in a crowdsourcing procedure.

**Embodiment 19**

The method according to any of embodiments 17 or 18, wherein the second track corresponds to a subset of the radiomap data, the subset comprising at least one fingerprint of/acquired at the third position and one fingerprint of/acquired at the fourth position.

**Embodiment 20**

The method according to embodiment 19, wherein the subset comprises fingerprints of/acquired at a plurality of positions of the second track.

**Embodiment 21**

The method according to any of embodiments 17 to 20, further comprising:

- associating or causing associating at least the radiomap data of the second position and at least the radiomap data of the third position respectively with corresponding map data of a geographic and/or geodetic system.

**Embodiment 22**

The method according to embodiment 21, wherein the geodetic system is a WGS-84 system.

**Embodiment 23**

The method according to any of the preceding embodiments, wherein the relative altitude information of the structure corresponds to a floor identifier identifying a respective floor level of the structure.

**Embodiment 24**

The method according to any of the preceding embodiments, wherein the first position is outside of the structure, wherein the reference altitude of the first position corresponds to a ground level of the structure, and wherein the associating or causing associating the radiomap data of the second position with relative altitude information of the structure associates the radiomap data of the second position with a floor identifier identifying a ground floor of the structure.

**Embodiment 25**

The method according to any of embodiments 17 to 24, wherein the fourth position is outside of the structure, and wherein the associating or causing associating at least the radiomap data of the third position and at least the radiomap data of the second position with same relative altitude information of the structure associates the radiomap data of the second position and the radiomap data of the third position with a floor identifier identifying a ground level of the structure.

**Embodiment 26**

The method according to any of the preceding embodiments, wherein the/a mobile device is an Internet-of-Things (IoT) device, a smart home device, a smartphone, a tablet computer, a notebook computer, a smart watch, and a smart band.

**Embodiment 27**

The method according to any of embodiments 10 to 25, wherein the wireless access point corresponds to or comprises at least one of:

- a Wireless Local Area Network, WLAN, access point;
- a Bluetooth access point; or
- an access point of a cellular communications network.

**Embodiment 28**

A method performed by at least one apparatus, the method comprising:

- obtaining or causing obtaining radio measurement data representative of a radio environment at a position of the at least one apparatus;
- obtaining or causing obtaining a position estimate of the at least one apparatus based on the radio measurement data and radio map data representing at least a part of a structure; wherein the radiomap data comprises radiomap data acquired at least along a part of a track comprising a first position at a reference altitude and a second position inside of the structure, wherein the second position is associated with relative altitude information of the structure based on the reference altitude of the first position.

**Embodiment 29**

The method according to embodiment 28, wherein the at least one apparatus is a mobile device, in particular an Internet-of-Things (IoT) device, a smart home device, a smartphone, a tablet computer, a notebook computer, a smart watch, and a smart band.

**Embodiment 30**

The method according to any of embodiments 28 or 29, wherein obtaining or causing obtaining the position estimate of the at least one apparatus comprises:

- relating or causing relating the radio measurement data to the radio map data representing at least a part of a structure stored at a memory of the at least one apparatus.

**Embodiment 31**

The method according to any of embodiments 28 or 29, wherein obtaining or causing obtaining the The method according to any of embodiments 28 or 29, wherein obtaining or causing obtaining the position estimate of the at least one apparatus comprises:

- communicating or causing communicating the radio measurement data to at least one server via a wired or a wireless connection to be related to radiomap data representing at least a part of a structure stored at a memory of the at least one server.

Embodiment 32
The method according to any of embodiments 28 to 31, wherein the radiomap data comprises at least two radiomap data layers respectively corresponding to a respective absolute altitude and/or to an absolute altitude range, one of the at least two radiomap data layers comprising the radiomap data of the second position, wherein at least a part of the radiomap data layer comprising the radiomap data of the second position is associated with the relative altitude information of the structure based on the reference altitude of the first position.

Embodiment 33
The method according to any of embodiments 28 to 32, wherein at least the radiomap data of the second position is associated with map data of a geographic and/or geodetic system.

Embodiment 34
The method according to embodiment 33, wherein the geodetic system is a WGS-84 system.

Any presented connection in the described embodiments is to be understood in a way that the involved components are operationally coupled. Thus, the connections can be direct or indirect with any number or combination of intervening elements, and there may be merely a functional relationship between the components.
Further, as used in this text, the term 'circuitry' refers to any of the following:

(a) hardware-only circuit implementations (such as implementations in only analog and/or digital circuitry)
(b) combinations of circuits and software (and/or firmware), such as: (1) to a combination of processor(s) or (2) to sections of processor(s)/ software (including digital signal processor(s)), software, and memory(ies) that work together to cause an apparatus, such as a mobile device, to perform various functions) and
(c) to circuits, such as a microprocessor(s) or a section of a microprocessor(s), that re-quire software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.
Any of the processors mentioned in this text could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.
Moreover, any of the actions or steps described or illustrated herein may be implemented using executable instructions in a general-purpose or special-purpose processor and stored on a computer-readable storage medium (e.g., disk, memory, or the like) to be executed by such a processor.
References to 'computer-readable storage medium' should be understood to encompass specialized circuits such as FPGAs, ASICs, signal processing devices, and other devices.
The wording "A, or B, or C, or a combination thereof" or "at least one of A, B and C" may be understood to be not exhaustive and to include at least the following: (1) A, or (2) B, or (3) C, or (4) A and B, or (5) A and C, or (6) B and C, or (7) A and B and C.
It will be understood that all presented embodiments are only exemplary, and that any feature presented for a particular exemplary embodiment may be used with any aspect of the invention on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

**Claims**

1. A method performed by at least one apparatus, the method comprising:

   - obtaining or causing obtaining radiomap data representing at least a part of a structure, the radiomap data comprising radiomap data acquired at least along a part of a first track comprising a first position at a reference altitude and a second position inside of the structure;

- associating or causing associating the radiomap data of the second position with relative altitude information of the structure based on the reference altitude of the first position.

2. The method according to claim 1, wherein the radiomap data comprises at least two radiomap data layers respectively corresponding to a respective absolute altitude and/or to an absolute altitude range, one of the at least two radiomap data layers comprising the radiomap data of the second position, the method comprising:

- associating or causing associating at least a part of the radiomap data layer comprising the radiomap data of the second position with the relative altitude information of the structure based on the reference altitude of the first position.

3. The method according to any of claims 1 or 2, wherein the first position is determined to be at the reference altitude and the second position is determined to be inside of the structure based on at least one measurement result acquired with at least one sensor comprising at least one of

- a barometer;
- a gyroscope;
- an accelerometer;
- a motion sensor;
- a magnetometer;
- an audio sensor;
- a light sensor;
- a WLAN modem;
- a Bluetooth Low Energy (BLE) modem.

4. The method according to claim 3, wherein the at least one sensor is comprised by a mobile device used at least for acquiring the radiomap data representing at least the part of the structure along said part of the first track comprising the first position and the second position.

5. The method according to any of the preceding claims, further comprising:

- determining the first position to be at the reference altitude and the second position to be inside of the structure based on a change in barometric pressure, an audio environment, a light environment, a signal strength of a WLAN or BLE signal between the first position and the second position.

6. The method according to any of the preceding claims, further comprising:

- associating or causing associating at least the radiomap data of the second position with map data of a geographic and/or geodetic system.

7. The method according to any of claims 2 to 6, wherein a radiomap data layer different from the radiomap data layer comprising the radiomap data of the second position comprises radiomap data acquired at least along a part of a second track comprising a third position inside of the structure and a fourth position, the method further comprising:

- if the first and the fourth position are at a ground level of the structure, associating or causing associating at least the radiomap data of the third position and at least the radiomap data of the second position with same relative altitude information of the structure.

8. The method according to claim 7, further comprising:

- associating or causing associating at least the radiomap data of the second position and at least the radiomap data of the third position respectively with corresponding map data of a geographic and/or geodetic system.

9. The method according to any of the preceding claims, wherein the relative altitude information of the structure corresponds to a floor identifier identifying a respective floor level of the structure.

10. The method according to any of the preceding claims, wherein the first position is outside of the structure, wherein the reference altitude of the first position corresponds to a ground level of the structure, and wherein the associating or causing associating the radiomap data of the second position with relative altitude information of the structure associates the radiomap data of the second position with a floor identifier identifying a ground floor of the structure.

11. A method performed by at least one apparatus, the method comprising:

- obtaining or causing obtaining radio measurement data representative of a radio environment at a position of the at least one apparatus;
- obtaining or causing obtaining a position estimate of the at least one apparatus based on the radio measurement data and radio map data representing at least a part of a structure; wherein the radiomap data comprises radiomap data acquired at least along a part of a track comprising a first position at a reference altitude and a second position inside of the structure, wherein the second position is associated with relative altitude information of the structure based on the reference altitude of the first position.

12. The method according to claim 11, wherein the radiomap data comprises at least two radiomap data layers respectively corresponding to a respective absolute altitude and/or to an absolute altitude range, one of the at least two radiomap data layers comprising the radiomap data of the second position, wherein at least a part of the radiomap data layer comprising the radiomap data of the second position is associated with the relative altitude information of the structure based on the reference altitude of the first position.

13. The method according to any of claims 11 or 12, wherein at least the radiomap data of the second position is associated with map data of a geographic and/or geodetic system.

14. An apparatus comprising at least one processor and at least one memory that contains program code, wherein the memory and the program code are configured to use the at least one processor to cause an apparatus to perform and/or control at least the method of any of claims 1 to 13.

15. System comprising at least one apparatus configured to perform the method according to any of claims 1 to 10 and at least one further apparatus configured to perform the method according to any of claims 11 to 13.

Fig.1

Fig.2A

$$ID_{6.1} \longrightarrow (x_i^{C_1}, y_i^{C_1})$$
$$ID_{6.2} \longrightarrow (x_i^{C_2}, y_i^{C_2})$$
$$ID_{6.3} \longrightarrow (x_i^{C_3}, y_i^{C_3})$$
$$ID_{6.4} \longrightarrow (x_i^{C_4}, y_i^{C_4})$$

Fig.2B

34 — Communication Interface(s)

3

31 — Processor

32 — Program Memory

33 — Main Memory

35 — Mass Storage

Fig.3

44 — Communication Interface(s)

4

41 — Processor

46 — GNSS Interface

42 — Program Memory

43 — Main Memory

45 — User Interface

Fig.4

Fig.5A

Fig.5B

Fig.5C

Fig.5D

Fig.5E

610

Obtain or cause obtaining radiomap data representing at least part of a structure, the radiomap data comprising radiomap data acquired at least along part of a first track including a first position at a reference altitude and a second position inside of the structure — 611

Associate or cause associating the radiomap data of the second position with relative altitude information of the structure based on the reference altitude of the first position — 612

Fig.6A

620

Obtain or cause obtaining radio measurement data representative of a radio environment at a position of the at least one apparatus — 621

Obtain or cause obtaining a position estimate of the at least one apparatus based on the radio measurement data and radio map data representing at least part of a structure; wherein the radiomap data comprises radiomap data acquired at least along part of a track including a first position at a reference altitude and a second position inside of the structure, wherein the second position is associated with relative altitude information of the structure based on the reference altitude of the first position — 622

Fig.6B

700

Flash-Memory

701

SSD-Drive

702

Harddrive

703

SD-Card

704

Memory Stick

705

Optical
Storage Medium

706

Magnetic
Storage Medium

Fig.7

Europäisches
Patentamt

European
Patent Office

Office européen
des brevets

# EUROPEAN SEARCH REPORT

Application Number

EP 19 19 2197

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/205491 A1 (SYRJÄRINNE JARI [FI] ET AL) 20 July 2017 (2017-07-20)<br>* abstract *<br>* figures 1-8 *<br>* paragraphs [0007], [0018], [0052] - [0054], [0059], [0060], [0082], [0085], [0086], [0090], [0098], [0110], [0127] *<br>* claims 23-43 * | 1-15 | INV.<br>G01C21/20<br>G01C21/30<br>G01S5/02<br>H04W4/02 |
| X | WO 2019/110117 A1 (HERE GLOBAL BV [NL]) 13 June 2019 (2019-06-13)<br>* abstract *<br>* figures 1-4 *<br>* pages 1-4 *<br>* page 6, line 5 - page 7, line 25 *<br>* page 8, line 30 - page 10, line 25 *<br>* page 13, lines 22-30 *<br>* page 15, line 12 - page 16, line 12 *<br>* page 20, line 23 - page 22, line 3 *<br>* claims 1-23 * | 1-15 | |
| X | US 2017/371023 A1 (SYRJÄRINNE JARI [FI] ET AL) 28 December 2017 (2017-12-28)<br>* abstract *<br>* figures 1-10 *<br>* paragraphs [0001] - [0008], [0043] - [0048], [0094] - [0103] *<br>* claims 1-27 * | 1-15 | TECHNICAL FIELDS SEARCHED (IPC)<br><br>G01C<br>H04W<br>G01S |

-/--

The present search report has been drawn up for all claims

| Place of search | Date of completion of the search | Examiner |
|---|---|---|
| The Hague | 17 February 2020 | Toth, Rémy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 19 19 2197

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BURGESS SIMON ET AL: "Smartphone positioning in multi-floor environments without calibration or added infrastructure", 2016 INTERNATIONAL CONFERENCE ON INDOOR POSITIONING AND INDOOR NAVIGATION (IPIN), IEEE, 4 October 2016 (2016-10-04), pages 1-8, XP033005646, DOI: 10.1109/IPIN.2016.7743653 [retrieved on 2016-11-14] * abstract * * figures 1-13 * * I. Introduction * * C. Floor estimation * ----- | 1-15 | |

TECHNICAL FIELDS
SEARCHED      (IPC)

The present search report has been drawn up for all claims

| Place of search | Date of completion of the search | Examiner |
|---|---|---|
| The Hague | 17 February 2020 | Toth, Rémy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 19 2197

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2020

| Patent document cited in search report | | Publication date | Patent family member(s) | | Publication date |
|---|---|---|---|---|---|
| US 2017205491 | A1 | 20-07-2017 | EP 3170013 A1<br>US 2017205491 A1<br>WO 2016008540 A1 | | 24-05-2017<br>20-07-2017<br>21-01-2016 |
| WO 2019110117 | A1 | 13-06-2019 | NONE | | |
| US 2017371023 | A1 | 28-12-2017 | EP 3227707 A1<br>US 2017371023 A1<br>WO 2016086994 A1 | | 11-10-2017<br>28-12-2017<br>09-06-2016 |

EPO FORM P0459

For more details about this annex : see Official Journal of the European Patent Office, No. 12/82